# EUROPÄISCHE PATENTSCHRIFT

(11) **EP 3 899 861 B1**
(45) Veröffentlichungstag und Bekanntmachung des Hinweises auf die Patenterteilung: **11.06.2025**
(21) Anmeldenummer: 19829003.3
(22) Anmeldetag: 11.12.2019
(51) Int. Cl.: G06T 3/40, G06T 5/00

(54) **OPTIKKORREKTUR DURCH MASCHINENLERNEN**
OPTICAL CORRECTION VIA MACHINE LEARNING
CORRECTION OPTIQUE PAR APPRENTISSAGE AUTOMATIQUE

(30) Priorität: 18.12.2018 DE 102018222147
(43) Veröffentlichungstag der Anmeldung: 27.10.2021
(73) Patentinhaber: Leica Microsystems CMS GmbH, 35578 Wetzlar (DE)
(72) Erfinder: KAPPEL, Constantin, 69198 Schriesheim (DE); FAHRBACH, Florian, 68167 Mannheim (DE)
(74) Vertreter: Maiwald GmbH
(86) Internationale Anmeldenummer: PCT/EP2019/084553
(87) Internationale Veröffentlichungsnummer: WO 2020/126720

(56) Entgegenhaltungen:
- HONGDA WANG ET AL: "Deep learning achieves super-resolution in fluorescence microscopy", BIORXIV, 27 April 2018 (2018-04-27), XP055617997, Retrieved from the Internet <URL:https://www.biorxiv.org/content/biorxiv/early/2018/04/27/309641.full-text.pdf> [retrieved on 20190903], DOI: 10.1101/309641
- HAO ZHANG ET AL: "High-throughput, high-resolution registration-free generated adversarial network microscopy", ARXIV.ORG, CORNELL UNIVERSITY LIBRARY, 201 OLIN LIBRARY CORNELL UNIVERSITY ITHACA, NY 14853, 7 January 2018 (2018-01-07), XP081420255
- HONGDA WANG ET AL: "Deep learning achieves super-resolution in fluorescence microscopy", BIORXIV, 27 April 2018 (2018-04-27), XP055617997, Retrieved from the Internet <URL:https://www.biorxiv.org/content/biorxiv/early/2018/04/27/309641.full-text.pdf> [retrieved on 20190903], DOI: 10.1101/309641
- HAO ZHANG ET AL: "High-throughput, high-resolution registration-free generated adversarial network microscopy", ARXIV.ORG, CORNELL UNIVERSITY LIBRARY, 201 OLIN LIBRARY CORNELL UNIVERSITY ITHACA, NY 14853, 7 January 2018 (2018-01-07), XP081420255

## Beschreibung

Die Erfindung betrifft ein Verfahren und eine Vorrichtung zur Bestimmung eines neuronalen Netzes zur Korrektur von optischen Abbildungsfehlern.

Ein optisches System kann als Abbildungsfunktion, auch genannt optische Übertragungsfunktion (OTF), dergestalt aufgefasst werden, dass eine Wellenform, die das optische System am Ausgang verlässt, sich von der am Eingang des optischen Systems unterscheidet. Manche dieser Veränderungen sind unerwünscht und führen zu bekannten optischen Abbildungsfehlern, wie Aberrationen, Astigmatismus, Vignettierung und/oder Koma. Optische Abbildungsfehler können mit der Herstellung und Funktionsweise von optischen Systemen, wie beispielsweise Objektiven oder einzelnen Linsen, zusammenhängen. Diese optischen Abbildungsfehler können die Qualität von Bildern derart beeinträchtigen, dass bestimmte Informationen in den Bildern nicht direkt ersichtlich sind.

Der Stand der Technik zeigt verschiedene Verfahren zur Korrektur von optischen Abbildungsfehlern. Eine Möglichkeit aus dem Stand der Technik zur Vermeidung dieser optischen Fehler ist die Optimierung der optischen Systeme bei ihrer Herstellung. Zum Beispiel kann die Vergütung (Beschichtung) von Linsen zur Reduktion chromatischer Aberrationen oder die Verwendung bestimmter Gläser oder Mineralien mit streng festgelegten physikalischen Eigenschaften optische Abbildungsfehler reduzieren. Alternativ kann auch die Verwendung von zusätzlichen optischen Bauelementen in bestimmten Konstellationen eine Verbesserung der optischen Eigenschaften eines optischen Systems hervorrufen.

Dieses Verfahren aus dem Stand der Technik zeigt allerdings einige Nachteile und Probleme auf, die im Folgenden betrachtet werden. Optische Fehler lassen sich durch Verwendung hochwertigerer Materialien oder durch Verwendung weiterer optischer Elemente in einem optischen System reduzieren, aber nicht vollständig vermeiden. Zum Beispiel kann die Korrektur von Bildfehlern in Objektiven zum Rand hin nachlassen. Die Festlegung für welche numerische Apertur über welches Bildfeld ein Objektiv spezifiziert wird liegt ein Stück weit im Ermessen der Entwickler und hängt vom Abfall bestimmter Qualitätsparameter sowie den zu erwartenden Fertigungstoleranzen ab. Allerdings lassen sich optische Abbildungsfehler, die mit Fertigungstoleranzen zusammenhängen, durch eine Optimierung der Optiken nicht beheben. Somit können für hochwertige Objektive nur sehr kleine Fertigungstoleranzen zugelassen werden. Des Weiteren können durch dieses Verfahren zur Reduzierung von Abbildungsfehlern hohe Kosten (Materialkosten oder Kosten durch zusätzliche Bauteile) entstehen.

Eine andere Möglichkeit zur Korrektur von optischen Abbildungsfehlern ist, dass ein durch ein Bildaufzeichnungssystem erfasstes Bild mittels elektronischer Datenverarbeitung (EDV) weiterverarbeitet wird. Typsicherweise wird die Korrektur von Bildfehlern mit mathematischen Modellen durchgeführt. Dabei ist die Beschreibung der einzelnen Bestandteile des Fehlers mittels Zernike-Polynomen möglich. Bildfehler werden zerlegt in Anteile wie sphärische Aberrationen, chromatische Aberrationen, Astigmatismus, Koma etc. die wiederum bestimmten Zernike-Polynomen zugeordnet werden. Wenn nun mit einem Objektiv das Bild einer Punktquelle aufgenommen wird und somit die Punktspreizfunktion (PSF) des Objektivs bestimmt wird kann durch Vergleich des gemessenen Punktbildes mit dem idealen Punktbild auf die Beiträge der einzelnen Bildfehler und damit die Amplituden der Zernike-Polynome geschlossen werden. Allerdings ist in diesem Fall eine genaue Bestimmung der PSF des Objektives notwendig. Dies ist nicht immer möglich oder teilweise auch zu ungenau.

Andere Verfahren, wie z. B. Vignettierungskorrektur oder Dekonvolution, können auch zur Korrektur von optischen Fehlern genutzt werden. Bei bestehenden Verfahren zur Vignettierungskorrektur wird in der Regel ein Referenzbild mit einer homogenen Probe aufgenommen, das danach mit einem linearen Verfahren mit dem aufgenommenen Bild der Probe verrechnet wird. Dieses Verfahren hat allerdings den Nachteil, dass es nur auf eine Probenebene wirkt und andere Fehler, die mit der Vignettierung zusammenhängen, außer Acht lässt.

Ein Nachteil dieser mathematischen Verfahren aus dem Stand der Technik zur Korrektur von Abbildungsfehlern ist, dass die mathematischen Verfahren nicht oder nur eingeschränkt auf alte Daten, die mittels unbekannter Objektive aufgenommen wurden, angewendet werden können, da sie auf Messungen an bestimmten Proben oder einer Vermessung des Objektives und dessen optischen Eigenschaften angewiesen sind. Daher sind diese Verfahren aus dem Stand der Technik auf alte Daten (Bilder), die mittels unbekannter Objektive aufgenommen wurden, nicht anwendbar oder liefern ungenaue Ergebnisse.

Hongda Wang ET AL, "Deep learning achieves super-resolution in fluorescence microscopy", bioRxiv, doi:10.1101/309641, 27.04.2018, offenbart eine auf Deep-Learning basierende Methode zur Erzielung von Superauflösung in der Fluoreszenzmikroskopie.

HAO ZHANG ET AL, "High-throughput, high-resolution registration-free generated adversarial network microscopy", CORNELL UNIVERSITY LIBRARY, 201 OLIN LIBRARY CORNELL UNIVERSITY ITHACA, NY 14853, 07.01.2018 offenbart ein Verfahren, in dem ein Generative Adversarial Network (GAN) mit Lichtmikroskopie kombiniert wird, um Deep-Learning-Superauflösung unter einem großen Sichtfeld (FOV) zu erreichen.

Aufgabe der vorliegenden Erfindung ist es somit, verbesserte Mittel zur Korrektur von optischen Abbildungsfehlern bereitzustellen.

Die vorliegende Erfindung ist in den unabhängien Ansprüchen definiert und löst die angesprochenen Probleme und die Aufgabe durch ein Verfahren zur Bestimmung eines neuronalen Netzes zur Korrektur von optischen Abbildungsfehlern. Das Verfahren umfasst die Schritte des Bestimmens ein oder mehrerer Bilder, wobei die ein oder mehreren Bilder zumindest teilweise mit einem optischen System oder der Bauart eines optischen Systems zusammenhängen, und des Bestimmens eines neuronalen Netzes in Abhängigkeit der bestimmten ein oder mehreren Bilder derart, dass das bestimmte neuronale Netz angewendet auf ein mittels des optischen Systems erfasstes Bild ein in Bezug auf ein oder mehrere optische Abbildungsfehler korrigiertes Bild ausgibt.

Die erfindungsgemäße Vorrichtung umfasst ein oder mehrere Prozessoren und ein oder mehrere computerlesbare Speichermedien, wobei auf den ein oder mehreren computerlesbaren Speichermedien computerausführbare Anweisungen gespeichert sind, die, wenn sie von dem einen oder den mehreren Prozessoren ausgeführt werden, bewirken, dass ein oder mehrere Bilder mittels eines Abbildungs- und/oder Bildaufzeichnungssystems erfasst werden, wobei ein oder mehrere optische Abbildungsfehler in den ein oder mehreren erfassten Bildern in Zusammenhang mit mindestens einem Teil des Abbildungs- und/oder Bildaufzeichnungssystems stehen, und ein neuronales Netz auf die ein oder mehreren erfassten Bilder angewendet wird, wobei das neuronale Netz ausgestaltet ist aus den ein oder mehreren erfassten Bildern ein oder mehrere entsprechende korrigierte Bilder zu erzeugen derart, dass in den ein oder mehreren korrigierten Bildern die ein oder mehreren optischen Abbildungsfehler korrigiert oder reduziert sind.

Das erfindungsgemäße Verfahren und die erfindungsgemäße Vorrichtung haben den Vorteil, dass neuronale Netze, z. B. im Sinne von Deep Learning, zur Korrektur von optischen Abbildungsfehlern bestimmt oder angewendet werden. Dies ermöglicht es, die Abbildungsleistung bestehender optischer Systeme zu verbessern. Des Weiteren ermöglicht das erfindungsgemäße Verfahren und die erfindungsgemäße Vorrichtung, dass Kosten bei der Herstellung von optischen Systemen eingespart werden können. Die Herstellungskosten optischer Systeme, wie beispielsweise von Hochleistungssystemen, hängen stark davon ab, welche Maßnahmen zur Vermeidung optischer Abbildungsfehler ergriffen werden müssen (wie die Auswahl der Materialien, das Anbringen von Beschichtungen, das Einfügen weiterer Linsen und Linsengruppen). Ein weiterer Kostenfaktor bei der Produktion von optischen Systemen ist die zulässige Varianz der Optiken. Das erfindungsgemäße Verfahren erlaubt höhere Toleranzen für die Varianz optischer Parameter. Dadurch können Kosten gesenkt werden. Durch das Bestimmen von neuronalen Netzen zur Korrektur von optischen Abbildungsfehlern können beispielsweise bestimmte Herstellungsschritte bei der Herstellung von optischen Systemen eingespart, kostengünstigere Materialien verwendet und/oder Vereinfachungen des optischen Aufbaus (z. B. durch den Wegfall von Linsen) vorgenommen werden. Dadurch können Bildaufzeichnungssysteme oder optische Systeme, die in Kombination mit einem neuronalen Netz zur Korrektur von optischen Abbildungsfehlern arbeiten, kostengünstiger hergestellt werden. Außerdem ermöglichen neuronale Netze eine bessere Generalisierbarkeit für bisher nicht gekannte Anwendungen.

Ein weiterer Vorteil des erfindungsgemäßen Verfahrens und der erfindungsgemäßen Vorrichtung ist, dass optische Systeme so angepasst werden können, dass sich ihr Einsatzgebiet erweitert ohne die Bildqualität zu beeinflussen. Beispielsweise können an bestimmte Parameter optischer Systeme kleinere Ansprüche gestellt werden, wodurch sich die Freiheitsgrade in anderen optischen Eigenschaften erhöhen, was neue Anwendungsbereiche eröffnet. Zum Beispiel schließen sich maximale Planarität und maximaler Arbeitsabstand gegenseitig aus. Wenn optische Fehler, die mit der Planarität eines optischen Systems zusammenhängen, durch ein Bestimmen von einem neuronalen Netz zur Korrektur dieser Fehler vernachlässigt werden können, ist ein größerer Arbeitsabstand möglich und damit mehr Flexibilität bei der Probenauswahl. Des Weiteren kann das erfindungsgemäße Verfahren ein Mittel zur gleichzeitigen Korrektur von mehreren, auch nichtlinearen, optischen Fehlern bereitstellen.

Das erfindungsgemäße Verfahren und die erfindungsgemäße Vorrichtung können jeweils durch spezifische Ausgestaltungen weiter verbessert werden. Einzelne technische Merkmale der nachfolgend beschriebenen Ausgestaltungen der Erfindung können dabei beliebig miteinander kombiniert und/oder weggelassen werden, sofern es nicht auf den mit dem weggelassenen technischen Merkmal erzielten technischen Effekt ankommt.

In einer Ausführungsform umfasst das Bestimmen des neuronalen Netzes ein Trainieren des neuronalen Netzes. Das Bestimmen der ein oder mehreren Bilder kann ein Bestimmen von Trainingsbildern umfassen, wobei das Trainieren des neuronalen Netzes ein Trainieren an den Trainingsbildern, die eine Vielzahl von Bilderpaaren umfassen, umfasst. Jedes Bilderpaar der Vielzahl von Bilderpaaren für das Training kann jeweils ein Eingabebild für das neuronale Netz und ein Soll-Ausgabebild umfassen. Dies ermöglicht die Korrektur von Abbildungsfehlern in alten Daten, die mit unbekannten Objektiven aufgenommen wurden, und ist dadurch möglich, dass das neuronale Netz anhand von Trainingsdaten, die mit einem optischen System oder dessen Bauart zusammenhängen, gelernt hat optische Abbildungsfehler zu korrigieren. Es ist also im Einzelfall nicht unbedingt erforderlich, für jedes bestehende Objektiv Referenzmessungen durchzuführen, da das neuronale Netz lernt, wie die Bilddaten und Bildinhalte auszusehen haben. Herkömmliche Verfahren können das nicht.

In Ausführungsformen können die Trainingsbilder aus erfassten Bildern, die beispielsweise ein oder mehrere Probenarten abbilden, erzeugt werden, wobei die erfassten Bilder mittels ein oder mehrerer optischer Systeme und/oder mit dem optischen System erfasst wurden, und wobei keines, eine Teilmenge, oder alle der ein oder mehreren optischen Systeme von gleicher Bauart wie das optische System sind. In weiteren Ausführungsformen, die mit der vorherigen kombiniert werden können, können die Trainingsbilder durch eine Simulation von optischen Abbildungsfehlern erzeugt werden. Für die Simulation kann eine optische Übertragungsfunktion (OTF) oder eine Punktspreizfunktion (PSF) für das optische System oder für eine Bauart von optischen Systemen bestimmt werden. Alternativ kann die OTF oder PSF auch unabhängig von der Simulation bestimmt werden. Mit Hilfe der PSF oder der OTF, die ineinander überführt werden können, können Eingabebilder der Vielzahl von Bilderpaaren durch Faltung fehlerfreier Bilder mit der PSF erzeugt werden. Dies erlaubt es nahezu "perfekte" Trainingsdaten (Bilderpaare) zu erzeugen, da die fehlerfreien Bilder als entsprechende Soll-Ausgabebilder der Vielzahl von Bilderpaaren verwendet werden können. Das optische System kann Teil eines Abbildungs- und/oder Bildaufzeichnungssystems eines Mikroskops, eines Mikroskopsystems, einer Kamera, eines Smartphones, eines Teleskops, eines Computers, der vorteilhaft auch tragbar sein kann, oder eines Messgerätes sein, und ein oder mehrere optische Komponenten (beispielsweise Linsen, Spiegel und/oder andere Optiken) umfassen.

In einer Ausführungsform kann für das Trainieren des neuronalen Netzes (im Folgenden auch als erstes neuronales Netz bezeichnet) ein weiteres (zweites) neuronales Netz angewendet werden. Das weitere neuronale Netz kann als Verlustfunktion für das Training des ersten neuronalen Netzes angewendet werden. Dies ermöglicht ein verbessertes Training des ersten neuronalen Netzes, da ein neuronales Netz als Verlustfunktion ein genaues Training ermöglicht, bei dem sichergestellt wird, dass die Ausgabe des neuronalen Netzes einem gewünschten Bild gleicht. Dies ist nicht gewährleistet, wenn nur pro Pixel ein Fehler beim Ausgabebild berechnet wird. Somit werden die ausgegebenen Bilder nicht als Menge unabhängiger Pixel behandelt, sondern in einen semantischen Zusammenhang gestellt.

In vorteilhaften Ausführungsformen kann das bestimmte neuronale Netz weiter trainiert (feinjustiert) werden. Das Feinjustieren (im Folgenden auch Feintuning genannt) kann ein Trainieren nur eines Teils des bestimmten (ersten) neuronalen Netzes umfassen. Hierbei können ein oder mehrere Parameter des bestimmten neuronalen Netzes während des Feinjustierens unveränderlich bleiben. Des Weiteren kann das Feinjustieren ein Trainieren spezifisch für das optische System umfassen. Somit kann das neuronale Netz adaptiert werden um Abbildungsfehler, die spezifisch für das optische System sind, zu korrigieren. Das feinjustierte neuronale Netz kann eindeutig dem optischen System zugeordnet werden. Das Feinjustieren kann anhand von individuellen Trainingsdaten durchgeführt werden. Die individuellen Trainingsdaten können auf Basis von optischen Eigenschaften und/oder Messproben, die mit dem optischen System zusammenhängen, erzeugt werden. Die optischen Eigenschaften des optischen Systems können in einem Schritt bestimmt werden und/oder die Messproben können mittels des optischen Systems erfasst werden. Mindestens eines der Messproben, der optischen Eigenschaften und der individuellen Trainingsdaten können, beispielsweise in einer Datenbank, abgespeichert werden, wobei die Messproben, die optischen Eigenschaften und/oder die individuellen Trainingsdaten dem optischen System eindeutig zugeordnet sind.

In Ausgestaltungen des erfindungsgemäßen Verfahrens kann das optische System eindeutig und/oder automatisch identifizierbar sein. Das erste neuronale Netz, sowie das adaptierte / feinjustierte neuronale Netz, kann eindeutig dem optischen System zugeordnet werden. Beispielsweise kann das optische System mittels elektromagnetischer Identifikation, optischer Identifikation, mechanischer Identifikation oder magnetischer Identifikation identifizierbar sein.

In einer Ausgestaltung, die mit den vorherigen kombinierbar ist, umfasst das erfindungsgemäße Verfahren zur Korrektur von optischen Abbildungsfehlern ein Anwenden des bestimmten neuronalen Netzes oder des feinjustierten neuronalen Netzes auf erfasste Daten. Die erfassten Daten (z. B. Bilder) können mittels des optischen Systems oder einem optischen System des gleichen Typs (und einem Photodetektor oder, bei scannenden Systemen, mit einem Punktphotodetektor) erfasst worden sein. Die optischen Abbildungsfehler können Astigmatismus, Vignettierung, Koma, chromatische Aberration, sphärische Aberration oder eine Defokussierung umfassen.

In Ausführungsformen kann das Bestimmen des neuronalen Netzes ein Trainieren des neuronalen Netzes anhand der ein oder mehreren bestimmten Bildern umfassen, wobei das neuronale Netz während des Trainings lernt wie Objekte und/oder Strukturen in den ein oder mehreren Bildern idealerweise aussehen und Abweichungen davon korrigiert. Dies ermöglicht es Abbildungsfehler zu korrigieren, wenn die OTF nicht genau bekannt ist. In diesem Fall kann das neuronale Netz automatisch erkennen, welche Art von Fehler vorliegt und welche Art von Objekt in einem erfassten Bild abgebildet ist. Dabei müssen weder die Fehlerart noch der Objekttyp explizit angegeben sein. Das neuronale Netz wird trainiert um Objekte in einem erfassten Bild in ein korrigiertes Bild zu übertragen derart, dass "implizit", also als Teil der gelernten Parameter, im Netz das Objekt korrekt rekonstruiert wird. Voraussetzung dafür ist, dass das neuronale Netz beim Training ähnliche Objekte gesehen hat. Ähnlich bedeutet hier, dass die gleichen Bildmerkmale in den Trainingsbildern vorhanden waren wie auch in den zu korrigierenden Bildern, die Trainingsbilder also in einem Kontext mit den erfassten Bildern stehen.

In einer Ausführungsform ist die erfindungsgemäße Vorrichtung ausgestaltet die ein oder mehreren erfassten Bilder zu speichern und das neuronale Netz auf die ein oder mehreren abgespeicherten erfassten Bilder anzuwenden. Alternativ kann das neuronale Netz direkt auf die ein oder mehreren erfassten Bilder angewendet werden und nur die ein oder mehreren korrigierten Bilder gespeichert werden. Somit kann die Korrektur der optischen Abbildungsfehler schon während der Aufnahme der Bilder, also vor dem Abspeichern des Bildes ("in Echtzeit") erfolgen oder erst nachdem es bereits abgespeichert wurde. Der mindestens eine Teil des Abbildungs- und/oder Bildaufzeichnungssystems kann ein optisches System, eine photographische Schicht, einen sCMOS- oder CCD-Sensor, oder ein oder mehrere Streuscheiben umfassen.

Der vorliegende Erfindungsgegenstand soll im Weiteren anhand beispielhafter Zeichnungen näher beschrieben werden. In den Zeichnungen sind Beispiele vorteilhafter Ausgestaltungen der Erfindung gezeigt.

Es zeigen:
Figur 1 eine schematische Darstellung eines erfindungsgemäßen Verfahrens zur Bestimmung eines neuronalen Netzes zur Korrektur von optischen Abbildungsfehlern nach einer Ausführungsform,
Figur 2 eine schematische Darstellung eines erfindungsgemäßen Verfahrens zur Korrektur von optischen Abbildungsfehlern mittels eines neuronalen Netzes nach einer Ausführungsform,
Figur 3 eine schematische Darstellung einer erfindungsgemäßen Vorrichtung nach einer Ausführungsform, und
Figur 4 ein schematisches Flussdiagramm einer Ausführungsform des erfindungsgemäßen Verfahrens.

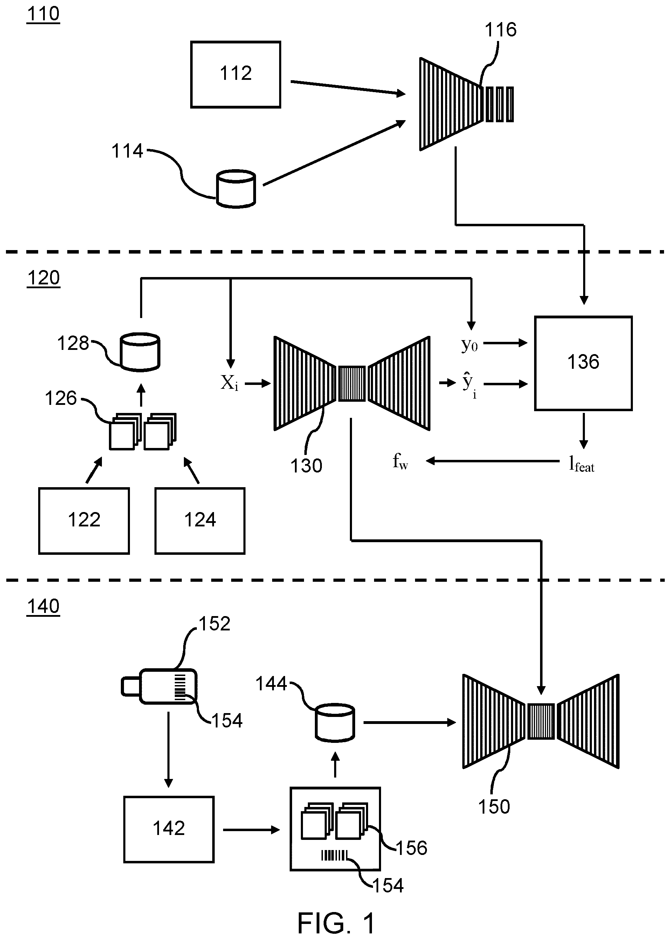

Figur 1 zeigt eine schematische Darstellung eines Verfahrens zur Bestimmung eines neuronalen Netzes 130. Das neuronale Netz 130 zur Korrektur von optischen Abbildungsfehlern, im Folgenden auch als "Korrekturnetz" bezeichnet, kann in mehreren Schritten 110 und 120 bestimmt und/oder trainiert werden. Zusätzlich kann das bestimmte neuronale Netz 130 in einem weiteren Trainingsschritt 140 feinjustiert werden. Das neuronale Netz 130 zur Korrektur von Bildfehlern kann beispielsweise einen Autoencoder, ein U-Net oder ein "Generative Adversarial Network" (GAN) umfassen und ist ausgestaltet um Bilder auszugeben. Das neuronale Netz 130 gehört zu der Klasse der "Convolutional Neural Networks", auch CNNs genannt.

In einem ersten Schritt 110, der optional ist, kann das Training der Schritte 120 und/oder 140 vorbereitet werden. Eine mögliche Vorbereitung des Trainings umfasst das Bestimmen einer Verlustfunktion 136 für das Training in Trainingsschritt 120. Zum Beispiel kann ein zweites neuronales Netz 116 bestimmt oder trainiert werden und zumindest teilweise als Basis für die Verlustfunktion 136 verwendet werden. Zum Beispiel kann das zweite neuronale Netz 116 oder Teile des zweiten neuronale Netzes 116, vorzugsweise der Teil des zweiten neuronalen Netzes 116, der Bildparameter oder Bildeigenschaften extrahiert, dem Training des neuronalen Netz 130 als Verlustfunktion 136 oder auch Zielfunktion dienen. In diesem Fall ist die Verlustfunktion 136 ein Verlustnetz.

Dieses zweite neuronale Netz 116, im Folgenden auch als "Mastermodell" bezeichnet, kann aus einer Vielzahl von neuronalen Netzen, die in einem Datenspeicher 114 gespeichert sind, ausgewählt werden und muss kein neuronales Netz sein, das selbst Bilder ausgibt. Beispielsweise kann es sich bei dem Mastermodell 116 um ein vortrainiertes neuronales Netz handeln, das ein Klassifizierungsproblem löst.

Alternativ kann das Mastermodell auch mittels Maschinenlernen in einem sogenannten "Training" 112 gefunden oder bestimmt werden. Dann kann das Mastermodell anhand von einer Vielzahl von Proben aus unterschiedlichen Anwendungsbereichen (z. B. Einzelzellkultur, dreidimensionale Zellkultur, Gewebeschnitte, Organoide, Sphäroide, native Organe oder lebende Organismen) trainiert werden. Dabei kann ein sogenanntes "supervised Training" verwendet werden. Für das Training kann ein Szenario verwendet werden, bei dem das Modell beispielsweise ein Klassifizierungsproblem löst, also selber gar keine Bilder ausgibt. Das Mastermodell kann in einem Kontext trainiert werden, der mit dem späteren Einsatzgebiet des neuronalen Netzes 130 zusammenhängt. Zum Beispiel kann das Mastermodell mit einem Datensatz von Mikroskopbildern trainiert werden.

Das Mastermodell kann als "Feature-Extractor", um sog. "Aktivierungen" zu berechnen, verwendet werden. Die Aktivierungen zeigen an, welche "Neuronen" auf bestimmte Bildanteile (Features) ansprechen, also z. B. Gesichter oder (im Kontext von Mikroskopie) Zellorganellen erkannt haben. In aggregierter Form kann man die Aktivierungen aller Neuronen des gesamten oder eines Teils des Mastermodells als Maß für die "Bildhaftigkeit" und damit Korrektheit des korrigierten Bilds ansehen und daher als Verlustfunktion einsetzen.

In Ausführungsformen kann das Mastermodell oder Teile des Mastermodells verwendet werden, um mit dem neuronalen Netz 130 eine Vorhersage zu machen oder die Konvergenz des neuronalen Netz 130 durch "Transfer Learning" zu beschleunigen.

Das Korrekturnetz 130 kann ausgestaltet sein, Eingabebilder Xᵢ in Ausgabebilder ŷᵢ umzuwandeln oder Eingabebilder Xᵢ auf Ausgabebilder ŷᵢ abzubilden. Die Verlustfunktion 136 kann ein numerisches Maß I_{feat} dafür ausgeben, wie gut Vorhersage ŷᵢ des Korrekturnetzes 130 und Soll-Ausgabebild y₀ (ein fehlerfreies Bild) übereinstimmen. Die Variablen Xᵢ, ŷᵢ und y₀ sind Vektoren oder Matrizen, deren Elemente den Pixeln von Bildern zugeordnet sind. Das zu trainierende Korrekturnetz 130 und die Verlustfunktion 136 formen ein System für das Training des Korrekturnetzes 130.

Ein Verlustnetz oder eine Verlustfunktion kann dazu verwendet werden, ein oder mehrere Verlustfunktionen zu definieren, die Wahrnehmungsunterschiede in Bezug auf den Inhalt zwischen Bildern, Ausgabebildern ŷᵢ und den entsprechenden Soll-Ausgabebild y₀, messen. Während des Trainings des Korrekturnetzes 130 wird das Verlustnetz nicht geändert oder mittrainiert.

Das Korrekturnetz 130 kann in Ausführungsformen ein neuronales Netz, beispielsweise ein "residual convolutional neural network", sein, das durch Gewichte ("weights") W parametrisiert wird. Das Korrekturnetz 130 wandelt Eingabebilder Xᵢ über die Abbildung ŷᵢ = f_{w}(Xᵢ) in Ausgabebilder ŷᵢ um. Jede Verlustfunktion der ein oder mehreren Verlustfunktionen kann einen Skalarwert berechnen, der die Differenz zwischen dem Ausgabebild ŷᵢ und dem Soll-Ausgabebild oder dem Zielbild y₀ darstellt. Das Korrekturnetz kann mit Deep Learning Methoden trainiert werden. Beispielsweise kann das Korrekturnetz mittels stochastischen Gradientenabfall ("stochastic gradient descent") trainiert werden, um eine gewichtete Kombination von Verlustfunktionen 136 zu minimieren. Beispielsweise werden die Gewichte W so angepasst, dass ein Merkmalswiederherstellungsverlust I_{feat} minimal ist.

Verlustfunktionen, die auf einem pro-Pixel-Verlust basieren, sind fehleranfällig und können unpräzise Ergebnisse für ein Training liefern. Um diesen Nachteilen zu begegnen, können in Ausführungsformen Verlustfunktionen verwendet werden, die Wahrnehmungsunterschiede und semantische Unterschiede zwischen Bildern bestimmen. Ein Mastermodell 116, das für die Bildklassifizierung trainiert wurde, besitzt bereits die Eigenschaft Merkmale oder semantische Informationen der Eingangsbilder in versteckte Repräsentationen ("hidden representations") oder versteckten Merkmalen auszudrücken. Diese versteckten Repräsentationen können verwendet werden um eine Aussage über die Ähnlichkeit von Bildern zu treffen. Somit kann ein neuronales Netz 116 eine Verlustfunktion 136 definieren, in der versteckte Repräsentationen und somit semantische Informationen miteinander verglichen werden. Das Verlustnetz 136 kann einen Merkmalswiederherstellungsverlust I_{feat} definieren, der ein Maß für die Unterschiede im Inhalt der Bilder zwischen dem Soll-Ausgabebild y₀ und dem Ausgabebild ŷᵢ des Korrekturnetzes 130 anzeigt.

Durch das Verlustnetz 136 kann somit ein Wahrnehmungsfehler (engl. "perceptual loss") bestimmt werden. Somit lässt sich mit Hilfe des Verlustnetzes 136 sicherstellen, dass die Ausgabe ŷᵢ des neuronalen Netzes 130 wie ein zu erwartendes Bild aussieht. Dies ist bei Verlustfunktionen, die nur pro Pixel eines Bildes einen Fehler berechnen, nicht gegeben. Somit werden die ausgegebenen Bilder ŷᵢ nicht als Menge unabhängiger Pixel behandelt, sondern in einen semantischen Zusammenhang gestellt.

In Ausführungsformen wird ein Trainingsdatensatz erzeugt. Der Trainingsdatensatz kann Bilderpaare 126 (Trainingsbilder) umfassen, wobei sich die Bilderpaare 126 dadurch auszeichnen, dass ein Bild eines Bilderpaares ein Eingabebild Xᵢ für das neuronale Netz 130 ist und das andere Bild des Bilderpaars einem Soll-Ausgabebild y₀ des neuronalen Netzes 130 entspricht. Das Eingabebild Xᵢ kann als fehlerbehaftetes Bild oder gemessenes oder erfasstes Bild gesehen werden und das Soll-Ausgabebild y₀ kann als gewünschtes fehlerfreies oder korrigiertes Bild gesehen werden. Basierend auf den Bilderpaaren 126 und insbesondere auf den Soll-Ausgabebildern, kann das neuronale Netz 130 trainiert werden ein oder mehrere Abbildungsfehler der Vielzahl von möglichen Abbildungsfehlern zu korrigieren. Mittels der Bilderpaare 126 kann ein neuronales Netz trainiert werden, das Abbildungsfehler korrigiert, die im Eingabebild vorhanden sind und im Soll-Ausgabebild fehlen oder abgeschwächt sind. Alternativ oder zusätzlich kann der Trainingsdatensatz für das Trainieren des neuronalen Netzes 130 weitere Daten umfassen. Die weiteren Daten können mindestens eines der folgenden umfassen: Parameterdaten die mit den Bilderpaaren 126 oder Trainingsbildern zusammenhängen, Validierungsdaten, Messdaten in Zusammenhang mit einer Herstellung eines optischen Systems, Daten zum Ablauf eines Experiments oder einer Messung, Informationen zu Reagenzien und Materialien, Informationen zu einem Objekt oder einer Probe, Informationen zu einem optischen System, anwenderbezogene Daten, Nutzereingaben, und Informationen zu einem Bilderfassungssystem.

Der Trainingsdatensatz kann mit Hilfe von verschiedenen Verfahren erzeugt werden, oder auch aus Kombinationen dieser Verfahren. In Figur 1 wird zwischen zwei Schritten 122 und 124 zur Herstellung von Trainingsdaten unterschieden, die kombinierbar sind. In einem Schritt 122 können die Trainingsdaten künstlich hergestellt werden. Zum Beispiel können Abbildungsfehler durch Bildbearbeitung künstlich erzeugt werden. In Schritt 124 können die Trainingsdaten aus gemessenen oder erfassten Daten erzeugt werden, wobei die gemessenen oder erfassten Daten mittels ein oder mehrerer optischer Systeme erfasst werden und die optischen Abbildungsfehler durch die ein oder mehreren optischen Systeme erzeugt werden. Die erzeugten Trainingsdaten können in Datenspeicher 128 abgespeichert werden. Einige mögliche Verfahren zur Herstellung von Trainingsdaten werden im Folgenden näher beschrieben.

Ein erstes Verfahren (Zoom-In-Strategie) zur Erzeugung von Trainingsdaten für das Training von neuronalen Netzen basiert auf der Aufnahme von Bildern von homogenen Proben mittels eines oder mehrerer optischer Systeme. Von diesen homogenen Proben werden Bilder mit unterschiedlichem Zoom erstellt. Beispielsweise werden erste Aufnahmen mit einem maximalen Zoom eines optischen Systems und zweite Aufnahmen mit einem minimalen Zoom des gleichen optischen Systems von einer homogenen Probe erzeugt. Bei der Aufnahme mit maximalem oder großem Zoom in der Bildmitte einer homogenen Probe kann das (annähernd) fehlerfreie Bild erstellt werden, und bei minimalem oder kleinem Zoom kann das fehlerbehaftete Bild erstellt werden. Bei diesem Verfahren wird ausgenutzt, dass sich einige Abbildungsfehler in der Bildmitte weniger stark auswirken als am Rand.

Ein zweites Verfahren (Verschiebe-Strategie) zur Erzeugung von Trainingsdaten ermöglicht es Bilderpaare 126 aus Aufnahmen von homogenen und von strukturierten Proben zu erzeugen. Wie in dem ersten Verfahren wird auch bei diesem Verfahren ausgenutzt, dass sich bestimmte optische Abbildungsfehler in der Bildmitte schwächer auswirken als am Bildrand. In diesem zweiten Verfahren wird mindestens ein Bild mit einem beliebigen Zoom, beispielsweise einem mittleren oder einem hohen Zoom, aufgenommen. Das Soll-Ausgabebild wird aus der Bildmitte eines aufgenommenen Bildes des mindestens einen aufgenommenen Bildes erstellt und das Eingabebild wird an einer definierten Position am Rand oder in einer Ecke des aufgenommenen Bildes aus dem aufgenommen Bild erzeugt. Die Bilderpaare 126 für den Trainingsdatensatz können viele verschiedene definierte Positionen und/oder unterschiedliche Zooms umfassen. Zur Erstellung des Trainingsdatensatzes können Aufnahmen an ein oder mehreren homogenen und/oder strukturierten Proben mit ein oder mehreren optischen Systemen von ein oder mehreren Typen durchgeführt werden.

Ein drittes Verfahren (Simulations-Strategie) zur Erzeugung von Trainingsdaten basiert auf der Simulation von optischen Abbildungsfehlern. Ist die optische Übertragungsfunktion (OTF), die gleich der Fouriertransformierten Punktspreizfunktion (PSF) eines optischen Systems ist, oder die PSF eines optischen Systems bekannt oder kann gemessen oder simuliert werden, so können Bilderpaare 126 künstlich erzeugt werden. Ein fehlerfreies Bild, das als Soll-Ausgabebild dienen kann, kann durch mathematische Verfahren, wie beispielsweise der Faltung des fehlerfreien Bildes mit der PSF eines optischen Systems, in ein fehlerbehaftetes Bild transformiert werden, das als Eingabebild dienen kann.

Der Trainingsdatensatz kann mit einer Vielzahl von optischen Systemen, z. B. einer Vielzahl von Objektiven, verschiedener Bauart erstellt werden. Dies kann alle optischen Systeme oder Arten von optischen Systemen umfassen, in deren Zusammenhang ein an diesen Trainingsdaten trainiertes neuronales Netz genutzt wird. Zum Beispiel können Trainingsdaten mittels verschiedener Objektive generiert werden und ein neuronales Netz mittels dieser Trainingsdaten trainiert werden. Dieses neuronale Netz kann genutzt werden um Abbildungsfehler in durch eines oder mehrere der verschiedenen Objektive erfassten Messbildern zu korrigieren.

Der Trainingsdatensatz kann in einer Cloud, auf einem Datenspeicher 128, einem Computer, wie beispielsweise einem Einzelplatzrechner, oder einem Server, der für das Trainieren von neuronalen Netzen geeignet ist, gespeichert werden. Der Server oder der Computer kann dann das Training durchführen und die Ergebnisse aus dem Training wieder speichern (zum Beispiel auf dem Datenspeicher 128 oder auf einem anderen Speicher).

Neuronale Netze können mit Deep Learning Methoden trainiert werden. Dies umfasst eine planmäßige Anwendung von mindestens einem Deep Learning Verfahren, vorzugsweise aber mehreren Deep Learning Verfahren zum Erreichen eines bestimmten Ziels. Das Ziel kann dabei die Bildbearbeitung umfassen (z. B. Korrektur von ein oder mehreren optischen Fehlern, Erzeugung eines Bildes aus einem anderen Bild, wobei sich mindestens ein Merkmal in den Bildern unterscheidet, etc.). Deep Learning Verfahren können eine Folge von Verfahrensschritten umfassen, welche einen Ablauf in nachvollziehbare Schritte unterteilen, und zwar derart, dass dieser Ablauf wiederholbar wird. Bei den Verfahrensschritten kann es sich um bestimmte Deep Learning Algorithmen handeln. Es können aber auch Methoden sein, mit denen ein Netz lernt (z. B. Backpropagation), es kann z. B. die Art der Datenerhebung sein oder die Art wie Daten über Hardware prozessiert werden etc.

Für das Training des neuronalen Netzes 130 kann der Trainingsdatensatz genutzt werden, der wie in einem oder mehreren der oben beschriebenen Verfahren erzeugt wurde oder der von Dritten zur Verfügung gestellt wurde. In einer Ausführungsform ist das Ziel für das Training, ein neuronales Netz 130 zu erzeugen, dass Eingangsbilder, beispielsweise Bilder die mit einem optischen System erfasst wurden, in korrigierte Bilder transformiert, wobei die transformierten Bilder mindestens einen Abbildungsfehler, der durch das optische System in den Eingangsbildern entstanden ist, korrigieren oder reduzieren. Das bedeutet, dass die Bildqualität, wie beispielsweise der Kontrast oder die Schärfe, im Ausgabebild (in ein oder mehreren Bereichen) gegenüber dem Eingabebild erhöht wurde. Im Idealfall können so aus fehlerbehafteten Bildern fehlerfreie Bilder generiert werden.

In einer weiteren Phase 140, dem sogenannten "Feintuning", kann das Korrekturnetz 130 weiter optimiert werden. Optische Systeme werden in der Regel mit gewissen Toleranzen in der Fertigung hergestellt. Daher können optische Systeme, die durch den gleichen Fertigungsprozess hergestellt wurden, Abweichungen im Bereich der Fertigungstoleranzen zueinander aufweisen. Diese Abweichungen können sich auf durch die optischen Systeme entstehende optische Abbildungsfehler auswirken. Optische Systeme gleicher Bauart können daher mit unterschiedlichen OTFs zusammenhängen.

Um diese Toleranzen in der Fertigung auszugleichen, können Eigenschaften optischer Systeme in einem Schritt 142 bestimmt werden. Zum Beispiel können die optischen Eigenschaften von einem individuellen optischen System 152 vermessen werden. Die Vermessung von dem optischen System 152 kann ein Erfassen von ein oder mehreren Messproben umfassen. Diese Messproben und/oder die Eigenschaften des optischen Systems können auf einem Datenspeicher 144 gespeichert werden. In Ausführungsformen umfasst das Bestimmen der Eigenschaften eines optischen Systems 152 ein Bestimmen einer OTF und/oder PSF für dieses hergestellte optische System 152. Der Datensatz mit den Messproben und/oder die Eigenschaften des optischen Systems kann über den gesamten Lebenszyklus des optischen Systems verfügbar sein. In einer Ausführungsform kann der Datensatz mit den Messproben und/oder die Eigenschaften des optischen Systems in einer Cloud abgespeichert werden.

Um die Messproben und/oder die Eigenschaften eines optischen Systems 152, wie beispielsweise einem Objektiv, dem optischen System 152 zuordnen zu können, werden die Daten, die die Messproben und/oder die Eigenschaften des optischen Systems umfassen, einer Kennung 154 des optischen Systems zugeordnet und können in Abhängigkeit dieser Kennung 154 oder zusammen mit einer der Kennung 154 entsprechenden Identifikationsnummer abgespeichert werden. Das optische System 152 kann seine Kennung 154 während der Herstellung erhalten, wobei die Kennung 152 eindeutig für jedes optische System und permanent am optischen System 152 angebracht sein kann. Beispielsweise kann die Kennung 154 eine optische Codierung (wie z. B. ein Barcode, ein Quick Response Code, ein Kennzeichen, oder eine bestimmte Farbe), eine Kodierung von ein oder mehreren Gewinden und/oder ein oder mehreren mechanischen Teilen, eine bestimmte Form, ein bestimmtes Gewicht, einen Klangstreifen, einen Stahlstich, Radiofrequenz-Transponder, Magnetstreifen-Chipkarte oder magnetische Farbe umfassen.

Somit kann das optische System 152 mittels elektromagnetischer Identifikation, optischer Identifikation, mechanischer Identifikation, magnetischer Identifikation oder einer Kombination davon identifiziert werden.

Basierend auf den Messproben und/oder den optischen Eigenschaften können Trainingsdaten 156 erzeugt werden. Diese Trainingsdaten können wie die Trainingsdaten erzeugt werden, wobei die Trainingsdaten 156 nur oder speziell mit dem optischen System 152 zusammenhängen. Die Trainingsdaten 156 können auf Basis der Messproben, die durch das optische System 152 aufgenommene Bilder enthalten können, oder auf Basis einer Simulation mittels der OTF oder der zugehörigen PSF des optischen Systems 152 erzeugt werden.

Da die Messproben und die optischen Eigenschaften eines optischen Systems diesem optischen System 152 zugeordnet werden können, können auch die Trainingsdaten 156 diesem optischen System 152 zugeordnet werden. Daher können die Trainingsdaten 156 in Abhängigkeit der Kennung 154 abgespeichert werden. Diese Daten 156 können, wie in Figur 1 angedeutet, in Abhängigkeit der Kennung 154 in Datenspeicher 144 abgespeichert werden.

In Ausführungsbeispielen können ein oder mehrere der Datenspeicher 114, 128 und 144 identisch sein. Zum Beispiel können alle Trainingsschritte 110, 120 und 130 bei einem Hersteller des optischen Systems 152 durchgeführt werden. Alternativ können auch einzelne Trainingsschritte 110, 120 und 130, wie beispielsweise das Feintuning 130, beim Anwender des optischen Systems 152 durchgeführt werden.

Auf den Datensatz mit den Messproben und/oder den Eigenschaften des optischen Systems 152, oder den Datensatz mit den zu einem optischen System zugehörigen Trainingsdaten 156, kann anhand der Kennung 154 des optischen Systems 152 oder der Kennung 154 entsprechenden Identifikationsnummer zugegriffen werden. In Ausführungsformen können diese Datensätze auf einem Server des Herstellers oder in einer Cloud gespeichert werden. Zum Beispiel kann ein Nutzer mit Hilfe eines Berechtigungsnachweises, wie einem Nutzernamen und einem Passwort oder der Identifikationsnummer des optischen Systems 152, auf diese Datensätze zugreifen.

In dem Trainingsschritt 140 kann das neuronale Netz 130 aus dem Trainingsschritt 120 feinjustiert werden. Im Folgenden wird das Feintuning beispielhaft anhand des neuronalen Netzes 130 beschrieben. Alternativ können allerdings auch neuronale Netze aus anderen Quellen, wie beispielsweise von einem Anwender eines neuronalen Netzes, weiter feinjustiert werden.

Feintuning bezieht sich darauf, ein vorher trainiertes neuronales Netz, das wesentliche Bildmerkmale bereits erkennen kann, auf einen neuen, unbekannten Datensatz anzupassen. Ein neuronales Netz, wie das neuronale Netz 130, kann so vortrainiert werden, dass bestimmte Bildfehler korrigiert werden. Dazu kann ein möglichst umfangreicher Datensatz verwendet werden. Für eine konkrete Optik oder ein konkretes optisches System, zum Beispiel ein bestimmtes Objektiv, könnte dann mittels Feintuning die Vorhersagegenauigkeit, sprich die Bildqualität der Ausgabebilder, verbessert werden, indem mit diesem Objektiv ein (kleinerer) Trainingsdatensatz 156 erstellt wird und das vortrainierte Netz 130 "feinjustiert", also angepasst wird. Diese Art von Feintuning kann beim Hersteller des optischen Systems stattfinden. Alternativ kann das Feintuning aber auch beim Kunden oder einer dritten Person stattfinden. Das Feintuning kann in Bezug auf ein bestimmtes optisches System oder ein oder mehrere bestimmte Proben erfolgen. Diese ein oder mehreren bestimmten Proben können beispielsweise im ursprünglichen Trainingsdatensatz nicht enthalten oder unterrepräsentiert gewesen sein. Somit lässt sich durch das Feintuning die Vorhersagegenauigkeit eines neuronalen Netzes verbessern. Beim Feintuning kann ein vortrainiertes neuronales Netz mit 1-2 Größenordnungen geringerer Lerngeschwindigkeit ("learning rate") auf neuen Daten trainiert werden. "Learning rate" in diesem Sinne ist ein Skalierungsfaktor für die numerische Optimierung, die die Schrittweite für die Änderung der gelernten Modellparameter bestimmt.

Ist diese groß, kann das Modell in weniger Schritten konvergieren, es besteht aber auch die Gefahr, dass die Modellparameter sich wieder vom Optimum wegbewegen. Beim Feintuning kann man davon ausgehen, mit den vortrainierten Parametern schon nahe am Optimum zu sein. Daher kann im Vergleich zum Training in Schritt 120 die Schrittweite oder die Lerngeschwindigkeit verringert werden, um das globale Minimum der Verlustfunktion zu finden. Somit kann verhindert werden, das vorhandene "Wissen" des Modells, repräsentiert durch die Modellparameter, nicht durch zu große Schritte zu zerstören.

Der Trainingsdatensatz 156 kann für das Feintuning des neuronalen Netzes 130 verwendet werden. Beim Feintuning wird ein bereits existierendes neuronales Netz, z. B. das neuronale Netz 130, als Grundlage für ein weiteres Training verwendet. Das weitere Training umfasst, dass nur ein Teil des neuronalen Netzes trainiert wird. Hierbei werden einige Parameter des neuronalen Netzes fixiert oder sind unveränderlich, währenddessen die restlichen Parameter durch das weitere Training beeinflusst oder geändert werden können. Dies ermöglicht ein schnelles Training. Das weitere Training kann mit unterschiedlichen Lernraten je nach Lage der Parameter im neuronalen Netz durchgeführt werden.

Für das weitere Training an den Trainingsdaten 156 können verschiedene Deep Learning Methoden verwendet werden. In Ausführungsformen wird das neuronale Netz 150 mit Hilfe eines zweiten neuronalen Netzes als Verlustfunktion trainiert. Dies kann wie im Trainingsschritt 120 in Figur 1 geschehen.

Durch das weitere Training entsteht ein adaptiertes neuronales Netz 150, dass speziell für das optische System 152 trainiert wurde. Somit kann eine individuelle Anpassung des neuronalen Netzes 150 auf das konkrete optische System 152 (wie z. B. ein Objektiv) erreicht werde, während die grundsätzlichen Eigenschaften des Korrekturnetzes 130, bestimmte optische Fehler korrigieren zu können, bestehen bleiben.

Das adaptierte neuronale Netz 150 kann in Zusammenhang mit der Kennung 154 des optische Systems 152 oder zusammen mit einer der Kennung 154 entsprechenden Identifikationsnummer in einem Datenspeicher, einem Server oder einer Cloud abgespeichert werden. In Ausführungsformen wird das adaptierte neuronale Netz 150 auf einem Server oder einer Cloud implementiert und zur Anwendung gebracht. Der Server oder die Cloud sind somit ausgestaltet um mit Hilfe des adaptierten neuronalen Netzes 150 optische Abbildungsfehler in Bildern zu korrigieren. Beispielsweise können fehlerbehaftete Bilder in die Cloud oder auf den Server geladen werden. Mittels des adaptierten neuronalen Netzes 150 können dann fehlerfreie oder fehlerreduzierte Bilder erzeugt und zur Verfügung gestellt werden. Auf das adaptierte neuronale Netz 150 kann anhand der Kennung 154 oder der entsprechenden Identifikationsnummer des optischen Systems 152 zugegriffen werden. Zum Beispiel kann ein Nutzer mit Hilfe eines Berechtigungsnachweises, wie einem Nutzernamen und einem Passwort, auf das adaptierte neuronale Netz 150 zugreifen. Der Berechtigungsnachweis des Nutzers kann durch den Kauf oder den Erhalt des optischen Systems erlangt werden. Alternativ kann das Objektiv oder das optische System 152 Teil eines Bildaufzeichnungssystems sein, und das neuronale Netz 150 kann auf dem Bildaufzeichnungssystem implementiert werden.

Somit lassen sich bei der Herstellung von optischen Systemen auftretende Unterschiede im Bereich der Fertigungstoleranzen individuell berücksichtigen und die optische Leistung des optischen Systems 152 kann, in Zusammenhang mit einem Anwenden des adaptierten neuronalen Netzes 150 auf die durch das optische System 152 erfassten Bilder, verbessert werden.

In Ausführungsformen kann das Feintuning für einen Typ oder eine Bauart von optischen Systemen durchgeführt werden anstelle von individuellen optischen Systemen. Hierbei kann ein Korrekturnetz 130, das anhand von Trainingsdaten, die mittels verschiedener Typen von optische Systemen erzeugt wurden, trainiert wurde, feinjustiert werden, wobei die Trainingsdaten 156 in Zusammenhang mit dem einen Typ von optischen Systemen erstellt wurden. In diesem Fall kann das adaptierte neuronale Netz 150 in Zusammenhang mit einer Kennung für den Typ von optischen Systemen abgespeichert werden.

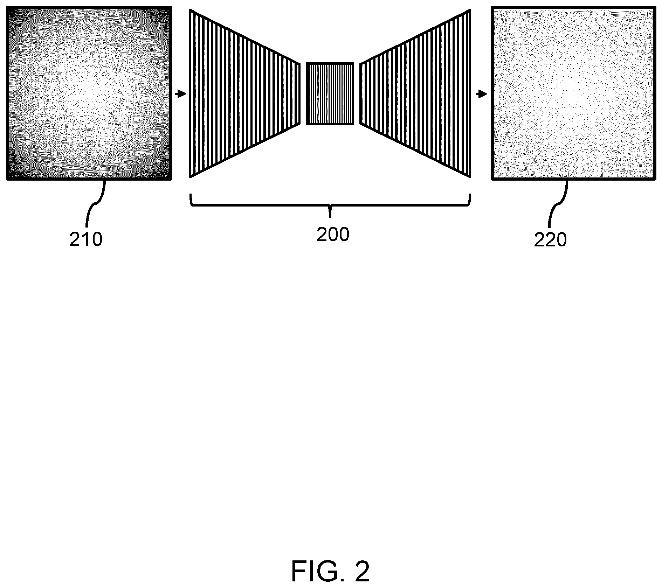

Figur 2 zeigt eine schematische Darstellung der Funktionsweise eines neuronalen Netzes 200 zur Korrektur von optischen Abbildungsfehlern. Das neuronale Netz 200 kann das Korrekturnetz 130 oder das adaptierte neuronale Netz 150 umfassen, die wie in Figur 1 trainiert wurden. Das neuronale Netz ist ausgestaltet optische Abbildungsfehler aus einem Bild 210 zu reduzieren oder zu entfernen, indem das neuronale Netz 200 ein fehlerfreies oder fehlerreduziertes Bild 220 erzeugt. Das Eingabebild 210 kann ein oder mehrere optische Abbildungsfehler, wie beispielsweise Vignettierung, enthalten. Alternativ oder zusätzlich kann das Bild 210 auch ein oder mehrere optische Abbildungsfehler, wie Astigmatismus, Koma, chromatische Aberration, sphärische Aberration, Bildfeldwölbung, Verzeichnung, Gaußfehler oder Defokussierung beinhalten. Aberrationen können technisch bedingt sein. Zum Beispiel können Maß- und Formabweichungen der Elemente (Linsen und Spiegel) eines optischen Systems, Abweichungen der Elemente des optischen Systems von ihren vorgesehenen Positionen, ein herstellungsbedingter abweichender Brechungsindex von Linsen des optischen Systems, Inhomogenitäten (Schlieren) im Glas einer Optik oder des optischen Systems, oder Eigenspannungen der Optiken und Spannungen durch die Fassung, die zu Spannungsdoppelbrechung führen können, in Zusammenhang mit Aberrationen in einem erfassten Bild stehen.

Wenn das neuronale Netz 200 auf ein fehlerbehaftetes Bild 210 angewendet wird oder dieses fehlerbehaftete Bild 210 in das neuronale Netz eingegeben wird, kann das neuronale Netz 200 aus dem Bild 210 ein Ausgabebild 220 erzeugen. In dem Ausgabebild 220 können die ein oder mehreren optische Abbildungsfehlern reduziert oder eliminiert sein. Dies kann sich dadurch ausdrücken, dass die Bildqualität (z. B. der Detailkontrast) im Ausgabebild 220 oder in Regionen des Ausgabebildes 220 größer ist als im Eingabebild 210 oder den entsprechenden Regionen des Eingabebildes.

Die Anwendung des neuronalen Netzes 200 unterscheidet sich vom Training des neuronalen Netzes 200 durch die verwendeten Datensätze. Beim Training werden ein oder mehrere fehlerbehaftete Bilder in das neuronale Netz eingegeben und interne Parameter des neuronalen Netzes so angepasst, dass die Ausgabebilder des neuronalen Netzes bestmöglich mit Soll-Ausgabebildern übereinstimmen. Bei der Anwendung des neuronalen Netzes durchlaufen die Bilddaten einmal das neuronale Netz und das neuronale Netz erzeugt ein Ausgabebild als Vorhersage.

Neuronale Netze können Ergebnisse darstellen, wobei diese durch mindestens einen Deep Learning Prozess und/oder mindestens eine Deep Learning Methode erlernt wurden. Diese neuronalen Netze kondensieren zu einem bestimmten Aufgaben-Ensemble gesammeltes Wissen in geeigneter Weise durch automatisiertes Lernen, derart, dass eine bestimmte Aufgabe fortan automatisiert und mit höchster Qualität durchgeführt werden kann.

Ein Abbildungs- und/oder Bildaufzeichnungssystem kann ausgestaltet sein um ein oder mehrere Bilder zu erfassen, wobei ein oder mehrere optische Abbildungsfehler in den ein oder mehreren erfassten Bildern in Zusammenhang mit mindestens einem Teil des Abbildungs- und/oder Bildaufzeichnungssystems stehen. Die ein oder mehreren Bilder können das Bild 210 umfassen, das mittels des neuronale Netz 200 bearbeitet werden kann. Das Abbildungs- und/oder Bildaufzeichnungssystem kann ein optisches System, wie beispielsweise ein Objektiv, Optiken oder einzelne Linsen, eine photographische Schicht, einen sCMOS-("scientific complementary metal-oxide-semiconductor") oder CCD- ("charge-coupled device") Sensor, oder ein oder mehrere Streuscheiben umfassen. In Ausführungsformen können die ein oder mehreren erfassten Bilder gespeichert werden und die ein oder mehreren abgespeicherten Bilder in das neuronale Netz 200 gegeben werden. Alternativ können die ein oder mehreren erfassten Bilder direkt in das neuronale Netz 200 gegeben werden und nur die ein oder mehreren korrigierten Bilder gespeichert werden.

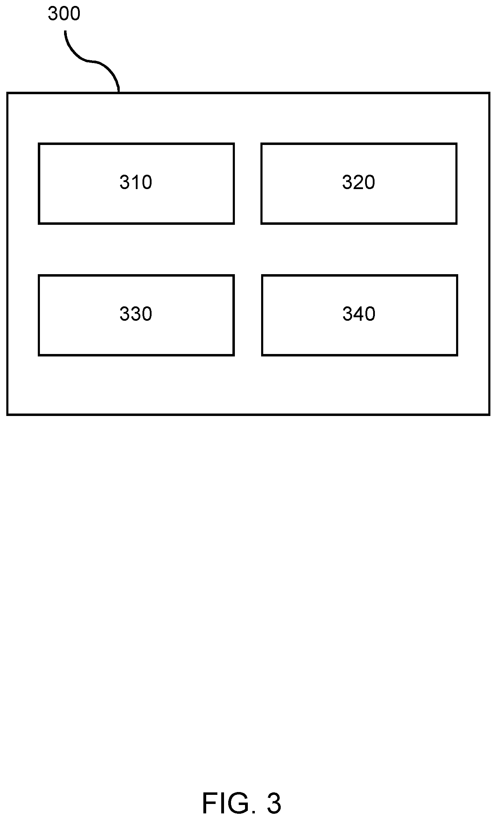

Figur 3 zeigt eine Vorrichtung 300, die ein oder mehrere Prozessoren 310 und ein oder mehrere Speichermedien 320 umfasst. Die Vorrichtung 300 kann ein Abbildungs- und/oder Bildaufzeichnungssystem umfassen. Alternativ kann die Vorrichtung 300 auch räumlich von einem Abbildungs- und/oder Bildaufzeichnungssystem getrennt sein und über ein Netzwerk, beispielsweise einem Funknetz, mit dem Abbildungs- und/oder Bildaufzeichnungssystem verbunden sein. In diesem Fall kann die Vorrichtung einen Arbeitsplatzrechner, einen Server, einen Kleinstrechner, Computer oder Embedded-Computer umfassen.

Die ein oder mehreren Prozessoren 310 können Rechenbeschleuniger, wie Graphical Processing Units (GPUs), Tensor Processing Units (TPUs) auf Machine Learning (ML)- und/oder Deep Learning (DL)- spezialisierte Application Specific Integrated Circuits (ASICs) oder Field Programmable Gated Arrays (FPGAs) oder mindestens eine Central Processing Unit (CPU) umfassen. Eine anwendungsspezifische integrierte Schaltung (englisch Application Specific Integrated Circuit, ASIC, auch Custom Chip) ist eine elektronische Schaltung, die als integrierter Schaltkreis realisiert werden kann. Wegen der Anpassung ihrer Architektur auf ein spezifisches Problem arbeiten ASICs sehr effizient und um einiges schneller als eine funktionsgleiche Umsetzung per Software in einem Mikrocontroller. Tensor Processing Units (TPUs), auch Tensor-Prozessoren, sind anwendungsspezifische Chips und können Anwendungen im Rahmen von maschinellem Lernen im Vergleich zu CPUs beschleunigen. Diese oder ähnliche spezialisierte Hardware kann genutzt werden um Deep Learning-Aufgaben optimal zu lösen. Insbesondere die Anwendung eines neuronalen Netzes, die Größenordnungen weniger Rechenleistung benötigt als das Training, also die Entwicklung eines Modells, funktioniert auch auf üblichen CPUs.

Des Weiteren kann die Vorrichtung in Ausführungsformen ein oder mehrere neuronale Netze 330 umfassen. Mit Hilfe der ein oder mehrere neuronalen Netze 330 kann die Vorrichtung 300 befähigt werden mittels künstlicher Intelligenz (Kl) optische Abbildungsfehler in Bildern zu korrigieren oder zu minimieren. Die ein oder mehreren neuronalen Netze 330 können durch die ein oder mehreren Prozessoren 310 ausgeführt werden. Das Ausführen von neuronalen Netzen 330 benötigt Größenordnungen weniger Rechenleistung als das Training oder die Entwicklung eines neuronalen Netzes.

Durch das Implementieren des neuronalen Netzes 330 auf der Vorrichtung 300 erlangt diese zusätzliche "Intelligenz". Die Vorrichtung 300 kann so in die Lage versetzt werden eine gewünschte Aufgabe selbstständig zu lösen. Somit ergibt sich eine kognitiv erweiterte Vorrichtung 300. Kognitiv erweitert bedeutet, dass die Vorrichtung durch Einsatz neuronaler Netze (bzw. Deep Learning-Modelle) oder anderer Maschinenlernverfahren dazu befähigt werden kann, Bildinhalte oder andere Daten semantisch zu erkennen und zu verarbeiten.

Des Weiteren kann die Vorrichtung 300 ein oder mehrere Komponenten 340 umfassen. Zum Beispiel können die ein oder mehrere Komponenten 340 eine Nutzerschnittstelle, und/oder eine Schnittstelle um neuronale Netze auf die Vorrichtung 300 herunterzuladen umfassen. In einer Ausführungsform umfassen die ein oder mehreren Komponenten 340 ein Bildaufzeichnungssystem zur Erfassung von Bildern.

In Ausführungsformen kann die Vorrichtung 300 genutzt werden um ein neuronales Netz 330 zu trainieren. Hierfür kann die Vorrichtung 300 eine Vorrichtung zum Bestimmen eines neuronalen Netzes zur Korrektur von optischen Abbildungsfehlern umfassen. Auf den ein oder mehreren computerlesbaren Speichermedien 320 gespeicherte computerausführbare Anweisungen können, wenn sie von dem einen oder den mehreren Prozessoren 310 ausgeführt werden, bewirken, dass eines oder Teile der Verfahren nach den Figuren 1 und/oder 4 ausgeführt werden.

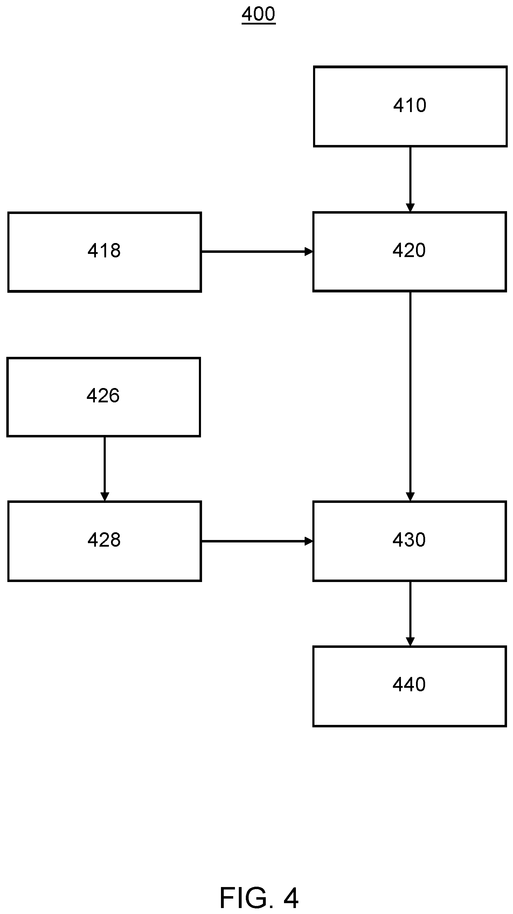

Figur 4 zeigt ein schematisches Flussdiagramm nach einem Ausführungsbeispiel eines erfindungsgemäßen (computer-implementierten) Verfahrens 400 zur Bestimmung eines ersten neuronalen Netzes zur Korrektur von optischen Abbildungsfehlern. Das Verfahren 400 umfasst einen Schritt 418, in welchem ein oder mehrere Bilder bestimmt werden, um anhand dieser Bilder ein erstes neuronales Netz zu Bestimmen (Schritt 420). Das Bestimmen 418 der ein oder mehreren Bilder kann ein Bestimmen von Trainingsbildern für ein Training eines ersten neuronalen Netzes umfassen. Das Bestimmen der Trainingsdaten oder Trainingsbilder kann ein oder mehrere Messungen und/oder ein oder mehrere Simulationen in Zusammenhang mit ein oder mehreren optischen Systemen oder Typen (Bauarten) von optischen Systemen und/oder ein oder mehreren Probentypen umfassen, um die Trainingsdaten zu erzeugen. Alternativ können Trainingsdaten, die in einer Datenbank gespeichert sind oder von Dritten zur Verfügung gestellt werden, für das Training bestimmt werden. Die Trainingsdaten umfassen ein oder mehrere Bilderpaare, wobei die Bilderpaare fehlerbehaftete Eingangsbilder und fehlerfreie oder fehlerreduzierte Soll-Ausgabebilder beinhalten.

In einem optionalen Schritt 410 kann ein Training vorbereitet werden. In Schritt 410 können die Trainingsbedingungen festgelegt werden. Dies kann ein Bestimmen eines zweiten neuronalen Netzes als Verlustfunktion für das erste neuronale Netz (das zu trainierende neuronale Netz) umfassen. Beispielsweise kann dies durch ein Trainieren des zweiten neuronalen Netzes geschehen. Alternativ kann das Bestimmen ein Auswählen des zweiten neuronalen Netzes aus einer Vielzahl von neuronalen Netzen umfassen, wobei die Vielzahl von neuronalen Netzen an verschiedenen Probentypen trainiert wurden und das zweite neuronale Netz in Abhängigkeit von dem Probentyp ausgewählt wird. Das zweite neuronale Netz kann an einem Probentyp trainiert worden sein oder trainiert werden, der in einem Zusammenhang mit dem späteren Anwendungszweck des ersten neuronalen Netzes steht. Das zweite neuronale Netz kann ausgestaltet sein Vorhersagen, wie beispielsweise eine Klassifizierung, basierend auf Bildern als Eingabewert für das zweite neuronale Netz zu treffen.

In Schritt 420 wird das erste neuronale Netz anhand der Trainingsdaten aus Schritt 418 trainiert. Während des Trainings in Schritt 420 werden innere Parameter (beispielsweise Gewichte "W" und Schwellwerte "B") des ersten neuronalen Netzes gefunden, die eine Vielzahl von in das erste neuronale Netz eingegebenen Eingabebildern optimal oder bestmöglich auf die Soll-Ausgabebilder abbilden. Somit ist das erste neuronale Netz in der Lage neue Bilder aus Bildern zu erzeugen und eine Aufgabe zu lösen, die in Zusammenhang mit den Trainingsdaten steht. Das erste neuronale Netz kann trainiert werden ein oder mehrere optische Abbildungsfehler in Bildern zu entfernen oder zu reduzieren derart, dass Eingabebilder beispielsweise einen niedrigeren Detailkontrast oder eine niedrigere Schärfe aufweisen als entsprechende Ausgabebilder des ersten neuronalen Netzes.

In einem Schritt 426 wird ein optisches System bestimmt. Um dieses optische System eindeutig identifizieren zu können, wird erfindungsgemäß dem optischen System eine Kennung zugeordnet. Hierfür kann das optische System mit einer individuellen Codierung versehen werden. Dies kann während der Herstellung des optischen Systems geschehen.

In Schritt 428 werden individuelle Trainingsdaten bestimmt. In Ausführungsformen umfasst das Bestimmen der individuellen Trainingsdaten ein Bestimmen von optischen Eigenschaften des individuellen, in Schritt 426 bestimmten, optischen Systems. Dies kann eine Vermessung und/oder Simulation des optischen Systems umfassen. Beispielsweise kann eine optische Übertragungsfunktion OTF für das individuelle optische System bestimmt werden. Dies kann während oder nach der Herstellung des optischen Systems geschehen. Das optische System kann der OTF mit Hilfe der Kennung des optischen Systems eindeutig zugeordnet werden. In diesem Fall können die individuellen Trainingsdaten basierend auf den optischen Eigenschaften des optischen Systems für ein Feintuning erzeugt werden. Mit Hilfe der Kenntnis der OTF können Bilderpaare als individuelle Trainingsdaten erzeugt werden, da die OTF die optischen Abbildungsfehler des zugehörigen optischen Systems beschreibt.

In einem Schritt 430 kann das erste neuronale Netz, das in Schritt 420 bestimmt wurde, feinjustiert werden. Hierbei wird das erste neuronale Netz weiter trainiert um ein adaptiertes (drittes) neuronales Netz zu erhalten. Das adaptierte neuronale Netzt kann für eine spezielle Anwendung trainiert werden. Beispielsweise kann das erste neuronale Netz anhand von den in Schritt 428 erzeugten individuellen Trainingsdaten weiter trainiert werden. Somit kann das adaptierte (dritte) neuronale Netz speziell für ein individuelles optisches System trainiert werden. Alternativ kann das erste neuronale Netz auch für einen bestimmten Anwendungszweck weiter trainiert werden, indem Trainingsdaten eines bestimmten Probentyps (die in einem Kontext mit dem bestimmten Anwendungszweck stehen) für das Feintuning verwendet werden.

Beim weiteren Trainieren (Feintuning) in Schritt 430 können diese individuellen Trainingsdaten verwendet werden um mindestens einen Teil des vortrainierten (ersten) neuronalen Netzes weiter zu trainieren. Beispielsweise kann nur ein Teil der inneren Parameter des neuronalen Netzes in Abhängigkeit des weiteren Trainings verändert werden, wobei die restlichen inneren Parameter nicht durch das weitere Training verändert werden können. Dies ermöglicht eine schnelle individuelle Anpassung des neuronalen Netzes an einen bestimmten Verwendungszweck, wie beispielsweise die Korrektur von optischen Abbildungsfehlern in Bildern die von einem bestimmten optischen System erfasst wurden.

Durch Feintuning neuronaler Netze können diese beständig verbessert und/oder der Anwendungsbereich der neuronalen Netze spezifiziert werden. Dies kann vorteilhaft durch Training nur weniger Knoten in einem neuronalen Netz geschehen. Beispielsweise kann ein leicht beschädigtes optisches System die Qualität von Bildern, die mit diesem beschädigten optischen System erfasst wurden, beeinträchtigen. Durch ein Feinjustieren und/oder ein Trainieren eines neuronalen Netzes nach dem erfindungsgemäßen Verfahren lässt sich ein neuronales Netz zur Korrektur dieser Fehler bestimmen.

In einem weiteren Schritt 440 kann das adaptierte neuronale Netz für Dritte zur Verfügung gestellt werden, auf einer Vorrichtung zur Anwendung gebracht werden, wobei die Vorrichtung in Zusammenhang mit dem optischen System steht, oder in einer Cloud, auf einem Server oder einem anderen Datenspeicher abgespeichert werden.

Verschiedene optische Aberrationen, die mit der Herstellung und Funktionsweise von optischen Systemen zusammenhängen, können mit Hilfe von Maschinenlern (ML)-Methoden korrigiert werden. Die beschriebenen ML-Methoden umfassen Algorithmen, mit denen Maschinen aus Erfahrung lernen können und können aus dem sog. "Deep Learning" (DL), einer bestimmten Art neuronaler Netze, kommen. Eine wirkungsvolle Korrektur von Abbildungsfehlern ermöglicht eine günstigere Produktion von leistungsfähigen Objektiven, da Abbildungsfehler von Objektiven mit deutlich größeren Bildfehlern, insbesondere größeren Schwankungen zwischen einzelnen Exemplaren derselben Baureihe, korrigiert werden können. Damit können einerseits die Toleranzen zwischen Objektiven ausgeglichen werden, indem eine größere Streuung bei den Toleranzen zugelassen wird. Darüber hinaus können entsprechende Objektive so konstruiert werden, dass ihre Abbildungsqualität auf der optischen Achse optimiert wird. Die optische Korrektur am Bildfeldrand muss nicht so hoch sein, da diese durch die neuronalen Netze korrigiert werden kann. Zum Beispiel können auch bei der Konstruktion der Objektive Abbildungsfehler danach bewertet werden, wie komplex die Korrektur durch das Objektiv oder Software-Postprocessing (Anwenden des neuronalen Netzes) ist. Mittels des ML/DL-Netzes besonders einfach zu korrigierende Fehler können in der Konstruktion/Konzeption des Objektivs weniger stark priorisiert werden.

### Bezugszeichen:

- 110, 120, 140: Trainingsschritte
- 112: Verfahrensschritt
- 114, 128, 144: Datenspeicher
- 116, 130, 150: neuronales Netz
- 122, 124: Verfahrensschritte
- 126: Bilderpaare
- 136: Verlustfunktion
- 142: Verfahrensschritt
- 152: optisches System
- 154: Kennung
- 156: individuelle Trainingsdaten
- 200: neuronales Netz
- 210: Bild mit optischen Abbildungsfehlern
- 220: korrigiertes Bild
- 300: Vorrichtung
- 310: Prozessor
- 320: Speichermedium
- 330: neuronales Netz
- 340: Komponenten
- 400: Verfahren
- 410 - 440: Verfahrensschritte

## Patentansprüche

1. Verfahren zur Bestimmung eines neuronalen Netzes (130; 200; 330) zur Korrektur von optischen Abbildungsfehlern, mit den Schritten:
Bestimmen (418) mehrerer Bilder, wobei die mehreren Bilder zumindest teilweise mit einem optischen System (152) oder der Bauart eines optischen Systems (152) zusammenhängen, wobei das Bestimmen (418) der mehreren Bilder ein Bestimmen von Trainingsbildern, die eine Vielzahl von Bilderpaaren (126) umfassen, umfasst; und
Bestimmen (420) eines neuronalen Netzes (130; 200; 330) in Abhängigkeit der bestimmten mehreren Bilder derart, dass das bestimmte neuronale Netz (130; 200; 330) angewendet auf ein mittels des optischen Systems (152) erfasstes Bild (210) ein in Bezug auf ein oder mehrere optische Abbildungsfehler korrigiertes Bild (220) ausgibt, wobei das Bestimmen (418) des neuronalen Netzes (130; 200; 330) ein Trainieren des neuronalen Netzes (130; 200; 330) an den Trainingsbildern umfasst, wobei jedes Bilderpaar der Vielzahl von Bilderpaaren (126) jeweils ein Eingabebild (Xᵢ) für das neuronale Netz (130; 200; 330) und ein Soll-Ausgabebild (y₀) umfasst;
**dadurch gekennzeichnet, dass** das Verfahren des Weiteren den Schritt (140) des Feinjustierens (430) des bestimmten neuronalen Netzes (130; 200; 330) umfasst, wobei das Feinjustieren (430) ein Trainieren spezifisch für das optische System (152) umfasst,
wobei die ein oder mehreren optischen Abbildungsfehler mindestens einen der folgenden optischen Abbildungsfehler umfassen: Astigmatismus, Vignettierung, Koma, chromatische Aberration, sphärische Aberration und Defokussierung,
wobei das feinjustierte neuronale Netz über eine eindeutige Kennung des optischen Systems, vorzugsweise einer Identifikationsnummer, dem optischen System zugeordnet werden kann, so dass auf das feinjustierte neuronale Netz anhand der Kennung des optischen Systems zugegriffen werden kann.

2. Verfahren nach Anspruch 1, **dadurch gekennzeichnet, dass** die Trainingsbilder aus erfassten Bildern erzeugt werden, wobei die erfassten Bilder mittels ein oder mehrerer optischer Systeme und/oder mit dem optischen System (152) erfasst wurden, und
wobei keines, eine Teilmenge, oder alle der ein oder mehreren optischen Systeme von gleicher Bauart wie das optische System (152) sind, und/oder
wobei die erfassten Bilder ein oder mehrere Probenarten abbilden.

3. Verfahren nach Anspruch 2, **dadurch gekennzeichnet, dass** die Trainingsbilder durch eine Simulation von optischen Abbildungsfehlern erzeugt werden, oder
das Verfahren des Weiteren den Schritt des Bestimmens mindestens einer optischen Übertragungsfunktion, OTF, oder mindestens einer Punktspreizfunktion, PSF, für das optische System (152) oder für optische Systeme, die zumindest teilweise artgleich mit dem optischen System (152) sind, umfasst, wobei Eingabebilder der Vielzahl von Bilderpaaren (126) durch Faltung fehlerfreier Bilder mit einer der mindestens einen Punktspreizfunktion, PSF, erzeugt werden, und wobei die fehlerfreien Bilder als entsprechende Soll-Ausgabebilder der Vielzahl von Bilderpaaren (126) verwendet werden, und/oder
das Trainieren des neuronalen Netzes (130; 200; 330) ein Trainieren an den Trainingsbildern und an weiteren Daten umfasst, wobei die weiteren Daten mindestens eines der folgenden umfassen: Parameterdaten die mit den Trainingsbildern zusammenhängen, Validierungsdaten, Messdaten in Zusammenhang mit einer Herstellung des optischen Systems (152), Daten zum Ablauf eines Experiments oder einer Messung, Informationen zu Reagenzien und Materialien, Informationen zu einem Objekt oder einer Probe, Informationen zu dem optischen System (152), anwenderbezogene Daten, Nutzereingaben, und Informationen zu einem Bilderfassungssystem.

4. Verfahren nach einem der Ansprüche 1 bis 3, **dadurch gekennzeichnet, dass**
das neuronale Netz (130; 200; 330) ein erstes neuronales Netz (130; 200; 330) ist und das Trainieren des ersten neuronalen Netzes (130; 200; 330) ein Anwenden eines zweiten neuronalen Netzes (136) umfasst, wobei das zweite neuronale Netz (136) als Verlustfunktion für das Training des ersten neuronalen Netzes (130; 200; 330) angewendet wird.

5. Verfahren nach einem der Ansprüche 1 bis 4, **dadurch gekennzeichnet, dass** das Feinjustieren (430) ein Trainieren nur eines Teils des bestimmten neuronalen Netzes (130; 200; 330) umfasst, wobei ein oder mehrere Parameter des bestimmten neuronalen Netzes (130; 200; 330) während des Feinjustierens (430) unveränderlich bleiben.

6. Verfahren nach einem der Ansprüche 1 bis 5, **dadurch gekennzeichnet, dass** das Verfahren des Weiteren den Schritt des Erzeugens (428) von individuellen Trainingsdaten (156) für das Feinjustieren (430) umfasst, wobei das Erzeugen (428) der individuellen Trainingsdaten (156) ein Bestimmen (142) von optischen Eigenschaften des optischen Systems und/oder ein Erfassen von Messproben mittels dem optischen System (152) umfasst, wobei die individuellen Trainingsdaten (156) auf Basis der optischen Eigenschaften und/oder der Messproben erzeugt werden.

7. Verfahren nach Anspruch 6, **dadurch gekennzeichnet, dass** das Verfahren den Schritt des Abspeicherns der Messproben, der optischen Eigenschaften und/oder der individuellen Trainingsdaten (156) umfasst, und/oder
wobei die Messproben, die optischen Eigenschaften und/oder die individuellen Trainingsdaten (156) dem optischen System (152) eindeutig zugeordnet sind.

8. Verfahren nach einem der Ansprüche 1 bis 7, **dadurch gekennzeichnet, dass** das optische System (152) eindeutig und/oder automatisch identifizierbar ist, und/oder
das neuronale Netz (130; 200; 330) eindeutig dem optischen System (152) zugeordnet werden kann.

9. Verfahren nach Anspruch 8, **dadurch gekennzeichnet, dass** das optische System (152) mittels elektromagnetischer Identifikation, optischer Identifikation (154), mechanischer Identifikation oder magnetischer Identifikation identifizierbar ist.

10. Verfahren nach einem der Ansprüche 1 bis 9, **dadurch gekennzeichnet, dass** das Verfahren den Schritt des Anwendens des bestimmten neuronalen Netzes (130; 200; 330) auf erfasste Daten (210) umfasst, wobei die erfassten Daten (210) mittels des optischen Systems (152) oder einem optischen System des gleichen Typs erfasst wurden.

11. Verfahren nach Anspruch 1, **dadurch gekennzeichnet, dass** das Bestimmen (420) des neuronalen Netzes (130; 200; 330) ein Trainieren des neuronalen Netzes (130; 200; 330) anhand der mehreren Bildern umfasst, wobei das neuronale Netz (130; 200; 330) während des Trainings lernt wie Objekte und/oder Strukturen in den mehreren Bildern idealerweise aussehen, und Abweichungen davon korrigiert.

12. Verfahren nach einem der Ansprüche 1 bis 11, **dadurch gekennzeichnet, dass** das optische System (152) Teil eines Abbildungs- und/oder Bildaufzeichnungssystems eines Mikroskops, eines Mikroskopsystems, einer Kamera, eines Smartphones, eines Teleskops, eines mobilen Computers, eines stationären Computers oder eines Messgerätes ist.

13. Vorrichtung (300) zur Korrektur von optischen Abbildungsfehlern, umfassend:
ein oder mehrere Prozessoren (310);
ein oder mehrere computerlesbare Speichermedien (320), auf denen computerausführbare Anweisungen gespeichert sind, die, wenn sie von dem einen oder den mehreren Prozessoren (310) ausgeführt werden, bewirken, dass
ein oder mehrere Bilder (210) mittels eines Abbildungs- und/oder Bildaufzeichnungssystems erfasst werden, wobei ein oder mehrere optische Abbildungsfehler in den ein oder mehreren erfassten Bildern (210) in Zusammenhang mit mindestens einem Teil des Abbildungs- und/oder Bildaufzeichnungssystems stehen, wobei der mindestens eine Teil des Abbildungs- und/oder Bildaufzeichnungssystems ein optisches System umfasst; und
ein feinjustiertes neuronales Netz (130, 150; 200; 330) auf die ein oder mehreren erfassten Bilder (210) angewendet wird, wobei das feinjustierte neuronale Netz (130, 150; 200; 330) ausgestaltet ist aus den ein oder mehreren erfassten Bildern (210) ein oder mehrere entsprechende korrigierte Bilder (220) zu erzeugen derart, dass in den ein oder mehreren korrigierten Bildern (220) die ein oder mehreren optischen Abbildungsfehler korrigiert oder reduziert sind,
wobei das feinjustierte neuronale Netz (130, 150; 200; 330) durch ein Feinjustieren eines neuronalen Netzes (130; 200; 330) bestimmt wurde,
wobei das Feinjustieren (430) ein Trainieren nur eines Teils des neuronalen Netzes (130; 200; 330) umfasst, und wobei das Feinjustieren (430) ein Trainieren spezifisch für das optische System (152) umfasst,
wobei die ein oder mehreren optischen Abbildungsfehler mindestens einen der folgenden optischen Abbildungsfehler umfassen: Astigmatismus, Vignettierung, Koma, chromatische Aberration, sphärische Aberration und Defokussierung, und
wobei das feinjustierte neuronale Netz über eine eindeutige Kennung des optischen Systems, vorzugsweise einer Identifikationsnummer, dem optischen System zugeordnet werden kann, so dass auf das feinjustierte neuronale Netz anhand der Kennung des optischen Systems zugegriffen werden kann.

14. Vorrichtung (300) nach Anspruch 13, **dadurch gekennzeichnet, dass** die ein oder mehreren erfassten Bilder (210) gespeichert werden und das neuronale Netz (130, 150; 200; 330) auf die ein oder mehreren abgespeicherten erfassten Bilder (210) angewendet wird, oder
dass das neuronale Netz (130, 150; 200; 330) direkt auf die ein oder mehreren erfassten Bilder (210) angewendet wird und nur die ein oder mehreren korrigierten Bilder (220) gespeichert werden.

15. Vorrichtung (300) nach einem der Ansprüche 13 und 14, **dadurch gekennzeichnet, dass** der mindestens eine Teil des Abbildungs- und/oder Bildaufzeichnungssystems eine photographische Schicht, einen sCMOS- oder CCD-Sensor, oder ein oder mehrere Streuscheiben umfasst.

## Claims

1. Method for determining a neural network (130; 200; 330) for correcting optical imaging errors, having the steps of:
determining (418) a plurality of images, wherein the plurality of images are at least partially related to an optical system (152) or the type of an optical system (152), wherein determining (418) the plurality of images comprises determining training images comprising a plurality of image pairs (126); and
determining (420) a neural network (130; 200; 330) based on the determined plurality of images such that the determined neural network (130; 200; 330) applied to an image (210) acquired by means of the optical system (152) outputs an image (220) which has been corrected with respect to one or more optical imaging errors, wherein determining (418) the neural network (130; 200; 330) comprises training the neural network (130; 200; 330) on the training images, wherein each image pair of the plurality of image pairs (126) comprises an input image (Xᵢ) for the neural network (130; 200; 330) and a target output image (y₀);
**characterized in that** the method further comprises the step (140) of fine-tuning (430) the determined neural network (130; 200; 330), wherein the fine-tuning (430) comprises training specifically for the optical system (152),
wherein the one or more optical imaging errors comprise at least one of the following optical imaging errors: astigmatism, vignetting, coma, chromatic aberration, spherical aberration, and defocusing,
wherein the fine-tuned neural network can be assigned to the optical system via a unique identifier of the optical system, preferably an identification number, such that the fine-tuned neural network can be accessed using the identifier of the optical system.

2. The method according to claim 1, **characterized in that** the training images are generated from acquired images, wherein the acquired images were acquired by means of one or more optical systems and/or with the optical system (152), and
wherein none, a subset, or all of the one or more optical systems are of the same type as the optical system (152), and/or wherein the acquired images depict one or more sample types.

3. The method according to claim 2, **characterized in that** the training images are generated by a simulation of optical imaging errors, or
the method further comprises the step of determining at least one optical transfer function, OTF, or at least one point spread function, PSF, for the optical system (152) or for optical systems that are at least partially identical to the optical system (152), wherein input images of the plurality of image pairs (126) are convolution of error-free images with one of the at least one point spread function, PSF, and wherein the error-free images are used as corresponding target output images of the plurality of image pairs (126), and/or
training the neural network (130; 200; 330) comprises training on the training images and on further data, wherein the further data comprises at least one of the following: parameter data related to the training images, validation data, measurement data related to the production of the optical system (152), data on the course of an experiment or a measurement, information about reagents and materials, information about an object or a sample, information about the optical system (152), user-related data, user inputs, and information about an image acquisition system.

4. The method according to any one of claims 1 to 3, **characterized in that** the neural network (130; 200; 330) is a first neural network (130; 200; 330) and the training of the first neural network (130; 200; 330) comprises applying a second neural network (136), wherein the second neural network (136) is applied as a loss function for the training of the first neural network (130; 200; 330).

5. The method according to any one of claims 1 to 4, **characterized in that** the fine-tuning (430) comprises training only a part of the determined neural network (130; 200; 330), wherein one or more parameters of the determined neural network (130; 200; 330) remain unchangeable during the fine-tuning (430).

6. The method according to any one of claims 1 to 5, **characterized in that** the method further comprises the step of generating (428) individual training data (156) for the fine-tuning (430), wherein generating (428) the individual training data (156) comprises determining (142) optical properties of the optical system and/or detecting measurement samples by means of the optical system (152), wherein the individual training data (156) are generated on the basis of the optical properties and/or the measurement samples.

7. The method according to claim 6, **characterized in that** the method comprises the step of storing the measurement samples, the optical properties and/or the individual training data (156), and/or
wherein the measurement samples, the optical properties and/or the individual training data (156) are uniquely assigned to the optical system (152).

8. The method according to any one of claims 1 to 7, **characterized in that** the optical system (152) is uniquely and/or automatically identifiable, and/or
the neural network (130; 200; 330) can be uniquely assigned to the optical system (152).

9. The method according to claim 8, **characterized in that** the optical system (152) is identifiable by means of electromagnetic identification, optical identification (154), mechanical identification or magnetic identification.

10. The method according to any one of claims 1 to 9, **characterized in that** the method comprises the step of applying the determined neural network (130; 200; 330) to acquired data (210), wherein the acquired data (210) are acquired by means of the optical system (152) or an optical system of the same type.

11. The method according to claim 1, **characterized in that** determining (420) the neural network (130; 200; 330) comprises training the neural network (130; 200; 330) based on the plurality of images, wherein the neural network (130; 200; 330) during the training learns how objects and/or structures in the plurality of images ideally look and corrects deviations therefrom.

12. The method according to any one of claims 1 to 11, **characterized in that** the optical system (152) is part of an imaging and/or image recording system of a microscope, a microscope system, a camera, a smartphone, a telescope, a mobile computer, a stationary computer or a measuring appliance.

13. Device (300) for correcting optical imaging errors, comprising:
one or more processors (310);
one or more computer-readable storage media (320) having computer-executable instructions stored thereon that, when executed by the one or more processors (310), cause
one or more images (210) to be acquired by means of an imaging and/or image recording system, wherein one or more optical imaging errors in the one or more acquired images (210) are associated with at least a part of the imaging and/or image recording system, wherein the at least one part of the imaging and/or image recording system comprises an optical system; and
a fine-tuned neural network (130, 150; 200; 330) is applied to the one or more acquired images (210), wherein
the fine-tuned neural network (130, 150; 200; 330) is configured to generate one or more corresponding corrected images (220) from the one or more acquired images (210) such that the one or more optical imaging errors are corrected or reduced in the one or more corrected images (220),
wherein the fine-tuned neural network (130, 150; 200; 330) is determined by fine-tuning a neural network (130; 200; 330),
wherein the fine adjustment (430) comprises training only a part of the neural network (130; 200; 330), and wherein the fine adjustment (430) comprises training specifically for the optical system (152),
wherein the one or more optical imaging errors comprise at least one of the following optical imaging errors: astigmatism, vignetting, coma, chromatic aberration, spherical aberration and defocusing, and
wherein the fine-tuned neural network can be assigned to the optical system via a unique identifier of the optical system, preferably an identification number, such that the fine-tuned neural network can be accessed using the identifier of the optical system.

14. The device (300) according to claim 13, **characterized in that** the one or more acquired images (210) are stored and the neural network (130, 150; 200; 330) is applied to the one or more stored acquired images (210), or
**in that** the neural network (130, 150; 200; 330) is applied directly to the one or more acquired images (210) and only the one or more corrected images (220) are stored.

15. The device (300) according to any one of claims 13 and 14, **characterized in that** the at least one part of the imaging and/or image recording system comprises a photographic layer, an sCMOS- or CCD-sensor, or one or more diffuser plates.

## Revendications

1. Procédé pour la détermination d'un réseau neuronal (130 ; 200 ; 330) pour la correction de défauts d'imagerie optique, comprenant les étapes suivantes :
détermination (418) de plusieurs images, dans lequel les plusieurs images sont au moins partiellement liées à un système optique (152) ou à la conception d'un système optique (152), dans lequel la détermination (418) desdites plusieurs images comprend une détermination d'images d'apprentissage qui comprennent une pluralité de paires d'images (126) ; et
détermination (420) d'un réseau neuronal (130 ; 200 ; 330) en fonction desdites plusieurs images déterminées, de telle sorte que le réseau neuronal (130 ; 200 ; 330) déterminé, appliqué à une image (210) acquise au moyen du système optique (152), émette une image (220) corrigée par rapport à un ou plusieurs défauts d'imagerie optique, dans lequel la détermination (418) du réseau neuronal (130; 200 ; 330) comprend un apprentissage du réseau neuronal (130 ; 200 ; 330) sur les images d'apprentissage, dans lequel chaque paire d'images de la pluralité de paires d'images (126) comprend respectivement une image d'entrée (Xᵢ) pour le réseau neuronal (130 ; 200 ; 330) et une image de sortie théorique (y₀) ;
**caractérisé en ce que** le procédé comprend en outre l'étape (140) de réglage précis (430) du réseau neuronal (130 ; 200 ; 330) déterminé, dans lequel le réglage précis (430) comprend un apprentissage spécifique pour le système optique (152),
dans lequel lesdits un ou plusieurs défauts d'imagerie optique comprennent au moins l'un des défauts d'imagerie optique suivants : astigmatisme, vignettage, coma, aberration chromatique, aberration sphérique et défocalisation,
dans lequel le réseau neuronal réglé avec précision peut être associé au système optique via un identifiant unique du système optique, de préférence un numéro d'identification, de sorte que le réseau neuronal réglé avec précision puisse être accessible au moyen de l'identifiant du système optique.

2. Procédé selon la revendication 1, **caractérisé en ce que** les images d'apprentissage sont générées à partir d'images acquises, dans lequel les images acquises ont été acquises au moyen d'un ou plusieurs systèmes optiques et/ou avec le système optique (152), et
dans lequel aucun desdits un ou plusieurs systèmes optiques, une quantité partielle de ces systèmes, ou tous ces systèmes, sont de même type de conception que le système optique (152), et/ou
dans lequel les images acquises représentent un ou plusieurs types d'échantillons.

3. Procédé selon la revendication 2, **caractérisé en ce que** les images d'apprentissage sont générées par une simulation d'erreurs d'imagerie optique, ou le procédé comprend en outre l'étape de détermination de l'au moins une fonction de transmission optique, OTF, ou au moins une fonction d'écartement de points, PSF, pour le système optique (152) ou pour les systèmes optiques qui sont au moins partiellement similaires au système optique (152), dans lequel les images d'entrée de la pluralité de paires d'images (126) sont générées par pliage d'images sans erreur avec l'une de l'au moins une fonction d'écartement des points, PSF, et dans lequel les images sans défaut sont utilisées comme images de sortie théoriques correspondantes de la pluralité de paires d'images (126), et/ou
l'apprentissage du réseau neuronal (130; 200 ; 330) comprend un apprentissage sur les images d'apprentissage et sur d'autres données, dans lequel les autres données comprennent au moins un parmi ce qui suit : les données de paramètres qui sont liées aux images d'apprentissage, les données de validation, les données de mesure liées à une fabrication du système optique (152), les données relatives au déroulement d'une expérience ou d'une mesure, les informations sur les réactifs et les matériaux, les informations sur un objet ou un échantillon, les informations sur le système optique (152), les données relatives à l'utilisateur, les entrées utilisateur et les informations sur un système d'acquisition d'images.

4. Procédé selon l'une quelconque des revendications 1 à 3, **caractérisé en ce que** le réseau neuronal (130 ; 200 ; 330) est un premier réseau neuronal (130 ; 200 ; 330) et l'apprentissage du premier réseau neuronal (130 ; 200 ; 330) comprend une application d'un deuxième réseau neuronal (136), dans lequel le deuxième réseau neuronal (136) est appliqué comme fonction de perte pour l'apprentissage du premier réseau neuronal (130 ; 200 ; 330).

5. Procédé selon l'une quelconque des revendications 1 à 4, **caractérisé en ce que** le réglage précis (430) comprend un apprentissage uniquement d'une partie du réseau neuronal (130 ; 200 ; 330) déterminé, dans lequel un ou plusieurs paramètres du réseau neuronal (130 ; 200 ; 330) déterminé restent invariables pendant le réglage précis (430).

6. Procédé selon l'une quelconque des revendications 1 à 5, **caractérisé en ce que** le procédé comprend en outre l'étape de génération (428) de données d'apprentissage (156) individuelles pour le réglage précis (430), dans lequel la génération (428) des données d'apprentissage (156) individuelles comprend une détermination (142) de propriétés optiques du système optique et/ou une acquisition d'échantillons de mesure au moyen du système optique (152), dans lequel les données d'apprentissage (156) individuelles sont générées sur la base des propriétés optiques et/ou des échantillons de mesure.

7. Procédé selon la revendication 6, **caractérisé en ce que** le procédé comprend l'étape de mise en mémoire des échantillons de mesure, des propriétés optiques et/ou des données d'apprentissage (156) individuelles, et/ou dans lequel les échantillons de mesure, les propriétés optiques et/ou les données d'apprentissage (156) individuelles sont clairement associés au système optique (152).

8. Procédé selon l'une quelconque des revendications 1 à 7, **caractérisé en ce que** le système optique (152) est clairement et/ou automatiquement identifiable, et/ou le réseau neuronal (130 ; 200 ; 330) peut être clairement associé au système optique (152).

9. Procédé selon la revendication 8, **caractérisé en ce que** le système optique (152) est identifiable par identification électromagnétique, identification optique (154), identification mécanique ou identification magnétique.

10. Procédé selon l'une quelconque des revendications 1 à 9, **caractérisé en ce que** le procédé comprend l'étape d'application du réseau neuronal (130 ; 200 ; 330) déterminé aux données (210) acquises, dans lequel les données (210) acquises ont été acquises au moyen du système optique (152) ou d'un système optique du même type.

11. Procédé selon la revendication 1, **caractérisé en ce que** la détermination (420) du réseau neuronal (130 ; 200 ; 330) comprend un apprentissage du réseau neuronal (130 ; 200 ; 330) à partir des plusieurs images, dans lequel le réseau neuronal (130 ; 200 ; 330) apprend pendant l'apprentissage à ce à quoi ressemblent idéalement les objets et/ou structures dans les plusieurs images et corrige les écarts de ceux-ci.

12. Procédé selon l'une quelconque des revendications 1 à 11, **caractérisé en ce que** le système optique (152) fait partie d'un système d'imagerie et/ou d'enregistrement d'image d'un microscope, d'un système de microscope, d'une caméra, d'un téléphone intelligent, d'un télescope, d'un ordinateur mobile, d'un ordinateur fixe ou d'un appareil de mesure.

13. Dispositif (300) pour la correction de défauts d'imagerie optique, comprenant :
un ou plusieurs processeurs (310) ;
un ou plusieurs supports de stockage (320) lisibles par ordinateur, sur lesquels sont stockées des instructions exécutables par ordinateur qui, lorsqu'elles sont exécutées par lesdits un ou plusieurs processeurs (310), ont pour effet que
une ou plusieurs images (210) sont acquises au moyen d'un système d'imagerie et/ou d'enregistrement d'images, dans lequel un ou plusieurs défauts d'imagerie optique dans lesdites une ou plusieurs images (210) acquises sont en corrélation avec au moins une partie du système d'imagerie et/ou d'enregistrement d'images, dans lequel ladite au moins une partie du système d'imagerie et/ou d'enregistrement d'images comprend un système optique ; et
un réseau neuronal (130, 150 ; 200 ; 330) réglé avec précision est appliqué auxdites une ou plusieurs images (210) acquises, dans lequel le réseau neuronal (130, 150 ; 200 ; 330) réglé avec précision est conçu pour générer une ou plusieurs images (220) corrigées correspondantes à partir desdites une ou plusieurs images (210) acquises de telle sorte que lesdites une ou plusieurs défauts d'imagerie optique soient corrigées ou réduites dans lesdites une ou plusieurs images (220) corrigées,
dans lequel le réseau neuronal (130, 150 ; 200 ; 330) réglé avec précision a été déterminé par un réglage avec précision d'un réseau neuronal (130 ; 200 ; 330),
dans lequel le réglage précis (430) comprend un apprentissage uniquement d'une partie du réseau neuronal (130 ; 200 ; 330), et dans lequel le réglage précis (430) comprend un apprentissage spécifique au système optique (152),
dans lequel lesdits un ou plusieurs défauts d'imagerie optique comprennent au moins l'un des défauts d'imagerie optique suivants : astigmatisme, vignettage, coma, aberration chromatique, aberration sphérique et défocalisation, et
dans lequel le réseau neuronal réglé avec précision peut être associé au système optique via un identifiant unique du système optique, de préférence un numéro d'identification, de sorte que le réseau neuronal réglé avec précision puisse être accessible au moyen de l'identifiant du système optique.

14. Dispositif (300) selon la revendication 13, **caractérisé en ce que** les une ou plusieurs images (210) acquises sont stockées et le réseau neuronal (130, 150 ; 200 ; 330) est appliqué aux une ou plusieurs images (210) acquises stockées, ou
**que** le réseau neuronal (130, 150 ; 200 ; 330) est appliqué directement aux une ou plusieurs images (210) acquises et que seules les une ou plusieurs images (220) corrigées sont stockées.

15. Dispositif (300) selon l'une quelconque des revendications 13 et 14, **caractérisé en ce que** l'au moins une partie du système d'imagerie et/ou d'enregistrement d'image comprend une couche photographique, un capteur sCMOS ou CCD, ou un ou plusieurs diffuseurs.
